# EUROPÄISCHE PATENTSCHRIFT

(11) **EP 3 333 810 B1**
(45) Veröffentlichungstag und Bekanntmachung des Hinweises auf die Patenterteilung: **25.10.2023**
(21) Anmeldenummer: 17203703.8
(22) Anmeldetag: 27.11.2017
(51) Int. Cl.: G06Q 10/0836, G07C 9/00, G06Q 10/08, A47G 29/14, G07F 17/12, A47G 29/12, G07C 9/27

(54) **FACHSPEZIFISCHE ZUGANGSBERECHTIGUNGSINFORMATION**
LOCKER SPECIFIC ACCESS AUTHORIZATION INFORMATION
INFORMATIONS D'AUTORISATION D'ACCÈS SPECIFIQUES POUR CASIERS

(30) Priorität: 07.12.2016 DE 102016123713
(43) Veröffentlichungstag der Anmeldung: 13.06.2018
(73) Patentinhaber: Deutsche Post AG, 53113 Bonn (DE)
(72) Erfinder: Dautz, Christoph, 53225 Bonn (DE); Ebner, Klaus, 53332 Bornheim (DE); Flesch, Marius, 50677 Köln (DE)
(74) Vertreter: Cohausz & Florack

(56) Entgegenhaltungen:
- DE-A1-102014 119 557
- US-A1- 2014 035 721
- US-A1- 2015 179 006

## Beschreibung

### Gebiet

Beispielhafte Ausführungsformen der Erfindung betreffen die Erzeugung, Bereitstellung und Prüfung von Zugangsberechtigungsinformation betreffend eine Fachanlage, insbesondere eine Fachanlage zum Einstellen und/oder Abholen von Sendungen von Zustell- oder Lieferdiensten.

### Hintergrund

Fachanlagen finden beispielsweise in Form von Schließfach- oder Paketfachanlagen mannigfaltig Anwendung. Ein Beispiel für eine Paketfachanlage ist die Packstation der Anmelderin, in die sich ein Empfänger Sendungen liefern lassen kann. Die Sendung wird vom Zusteller in ein Fach einer in der Nähe des Empfängers befindlichen Packstation eingelegt, das Fach verschlossen und der Empfänger entsprechend benachrichtigt. Der Empfänger kann dann das Fach beispielsweise mit einem Code öffnen und die Sendung entnehmen. Durch die Packstation entfällt für den Empfänger die Notwendigkeit, bei der Zustellung einer Sendung zu Hause sein zu müssen. Darüber hinaus kann die Packstation vom Empfänger zu jeder beliebigen Zeit aufgesucht und die Sendung entnommen werden, da zur Entnahme der Sendung kein Personal zugegen sein muss.

Um für den Empfänger den Empfang von Sendungen noch komfortabler zu gestalten, stellt die Anmelderin als weitere Zustellvariante die Lieferung von Sendungen in einen Paketkasten zur Verfügung. Ein Paketkasten ist vom Konzept ähnlich ausgebildet wie ein Briefkasten, also einem Empfänger zugeordnet und insbesondere unmittelbar an dessen Wohn- oder Geschäftssitz lokalisiert, aber mit größerem Fassungsvermögen versehen. Sowohl der Zusteller als auch der Empfänger können den Paketkasten z.B. mit elektronischen Schlüsseln öffnen. Der Paketkasten kann in einer Variante (etwa für Einfamilienhäuser) nur einem Empfänger zugeordnet sein und dann beispielsweise nur ein Paketfach aufweisen, kann aber in einer anderen Variante (etwa für Mehrfamilienhäuser oder Geschäftshäuser) auch einer Vielzahl von Empfängern zugeordnet sein und dann beispielsweise eine Vielzahl von Paketfächern aufweisen. Die letztere Variante wird in dieser Spezifikation auch als Paketkastenanlage bezeichnet. Die Zuordnung der Paketfächer einer Paketkastenanlage zu den Empfängern kann dabei statisch erfolgen, beispielsweise im Rahmen eines Anmeldungsprozesses des jeweiligen Empfängers. Vorteilhaft erfolgt die Zuordnung allerdings dynamisch. Dann kann insbesondere ausgenutzt werden, dass die Nutzung aller Paketfächer einer Paketkastenanlage üblicherweise nicht gleichzeitig erfolgt und die Anzahl der Empfänger dann größer gewählt werden als die Anzahl der Paketfächer der Paketfachanlage.

Beispiele sind in den Patentschriften US 2015/179006 A1, US 2014/035721 A1 und DE 10 2014 119557 A1 offenbart.

### Zusammenfassung einiger beispielhafter Ausführungsformen der Erfindung

Ob Zugang zu einem Fach einer Fachanlage, wie beispielsweise einer Paketkastenanlage, gewährt werden kann oder nicht, wird üblicherweise anhand von Zugangsberechtigungsinformation geprüft, die eine Person, die Zugang zu dem Fach erhalten möchte, bereitgestellt hat, beispielsweise an die Fachanlage. Denkbar ist, dass in der Zugangsberechtigungsinformation die grundsätzliche Berechtigung einer Person, insbesondere der die Zugangsberechtigungsinformation vorweisenden Person, Zugang zu einem Fach der Fachanlage zu erhalten, zum Ausdruck gebracht wird, aber die Information, auf welches Fach konkret sich die Zugangsberechtigungsinformation bezieht, entweder lokal in der Fachanlage oder zentral in einem Zentralsystem, das eine Vielzahl von Fachanlagen steuert, gespeichert ist. Beispielsweise ist in der Fachanlage eine Tabelle gespeichert, die eine jeweils aktuelle Assoziation zwischen Zugangsberechtigungsinformationen und Fächern widerspiegelt (beispielsweise anhand von jeweils in den Zugangsberechtigungsinformationen enthaltenen Kennungen, z.B. Personenkennungen, die dann durch Speicherung in der Tabelle jeweiligen Fächern zugeordnet werden). Vorteilhaft an dieser Vorgehensweise ist, dass die gleiche Zugangsberechtigungsinformation verwendet werden kann, auch wenn sich das Fach, zu dem eine Person Zugang haben soll, ändert. Es ist dann beispielsweise möglich, die Zugangsberechtigungsinformation einmal zu speichern (beispielsweise auf einem tragbaren elektronischen Gerät, z.B. einem Schlüsselanhänger) und für eine Vielzahl von Zugangsprozessen zu unterschiedlichen Fächern der Fachanlage zu nutzen. Nachteilig an dieser Vorgehensweise ist allerdings, dass die Zuordnung von Zugangsberechtigungsinformationen zu Fächern dann entweder in einem Zentralsystem oder lokal in der Fachanlage gespeichert ist. Bei der ersten Alternative ist es zur Ermittlung des Fachs, zu dem einer Person an der Fachanlage Zugang gewährt werden soll, erforderlich, dass die Fachanlage mit dem Zentralsystem kommuniziert, was entweder eine drahtgebundene oder drahtlose Kommunikationseinrichtung, insbesondere eine Weitbereichskommunikationseinrichtung, wie z.B. eine LAN (Local Area Network) Schnittstelle oder eine Schnittstelle für zellularen Mobilfunk, an der Fachanlage erfordert. Bei der zweiten Alternative (Speicherung der Zuordnung von Zugangsberechtigungsinformation zu Fächern lokal in der Fachanlage) ist es nachteilig, dass die gespeicherte Zuordnung bei Ereignissen wie Stromausfall oder anderweitigen Störungen (z.B. Absturz der Firmware oder des Betriebssystems der Fachanlage, Beschädigung der Steuerung der Fachanlage aufgrund Vandalismus oder anderweitiger mechanischer Einwirkung) verloren sein kann und dann vollkommen unklar ist, welche Zuordnungsberechtigungsinformation welchem Fach zugeordnet ist. Die Fächer der Fachanlage müssten dann geleert und erneut zu Zugangsberechtigungsinformationen zugeordnet werden. Wenn es sich bei der Fachanlage um eine Paketfachanlage handelt, müssten also alle bereits in Fächer der Fachanlage zugestellten Sendungen aus den Fächern entnommen und erneut zugestellt werden. Maßnahmen zur ausfallsicheren Speicherung der Zuordnung von Zugangsberechtigungsinformation zu Fächern könnten solchen Situationen entgegenwirken, würden aber die Komplexität und insbesondere den Stromverbrauch der Fachanlage erhöhen, was insbesondere bei Fachanlagen, die nicht mit dem Stromnetz verbunden sind (beispielsweise Fachanlagen mit Batteriebetrieb und/oder mit Solarzellen) unerwünscht ist.

Nachteilig an Zugangsberechtigungsinformation, die für einen längeren Zeitraum, beispielsweise mehrere Monate oder Jahre, gültig ist, um von einer Person für eine Vielzahl von Zugangsvorgängen an der Fachanlage genutzt werden zu können, ist darüber hinaus, dass bei Diebstahl einer tragbaren elektronischen Einheit, auf der die Zugangsberechtigungsinformation gespeichert ist, zumindest bis zur Sperrung der Zugangsberechtigungsinformation (soweit dies überhaupt möglich ist) Zugang zu einem Fach der Fachanlage durch den Dieb erfolgen kann.

Die vorliegende Erfindung hat sich die Aufgabe gestellt, eine oder mehrere der oben beschriebenen Nachteile zu überwinden.

Die Erfindung wird in den unabhängigen Ansprüchen definiert.

Gemäß einem ersten beispielhaften Aspekt der Erfindung wird ein Verfahren offenbart, das folgendes umfasst: Erzeugen und/oder Ausgeben von Zugangsberechtigungsinformation, deren Bereitstellung an eine Fachanlage notwendige Bedingung für die Gewährung von Zugang zu einem Fach einer Vielzahl von Fächern der Fachanlage durch die Fachanlage ist. Das Verfahren wird beispielsweise durch eine Vorrichtung ausgeführt, oder (gemeinschaftlich) durch ein System, dass zumindest zwei Vorrichtungen umfasst, beispielsweise dergestalt, dass eine Vorrichtung der Vorrichtungen das Erzeugen und die andere der Vorrichtungen das Ausgeben vornimmt. Die Vorrichtung oder eine der Vorrichtungen kann beispielsweise ein Server zur Erzeugung der Zugangsberechtigungsinformation sein. Die Vorrichtung oder die Vorrichtungen kann/können beispielsweise Bestandteil eines Zentralsystems (z.B. eines sog. Backends) sein, das an der Verwaltung (z.B. Fachverwaltung oder -reservierung) einer Vielzahl von Fachanlagen, umfassend die Fachanlage, und/oder an der Erzeugung der Zugangsberechtigungsinformation zumindest beteiligt ist.

Gemäß einem zweiten beispielhaften Aspekt der Erfindung wird ein Verfahren offenbart, das folgendes umfasst: Erhalten von Zugangsberechtigungsinformation an einer Fachanlage, wobei das Erhalten der Zugangsberechtigungsinformation notwendige Bedingung für die Gewährung von Zugang zu einem Fach einer Vielzahl von Fächern der Fachanlage durch die Fachanlage ist. Das Verfahren wird beispielsweise von der Fachanlage oder einer Vorrichtung der Fachanlage ausgeführt, beispielsweise von einem Prozessor der Fachanlage, insbesondere von einer Zugangskontrollvorrichtung.

Gemäß einem dritten beispielhaften Aspekt der Erfindung wird ein Verfahren offenbart, das folgendes umfasst: Erhalten von Zugangsberechtigungsinformation, deren Bereitstellung an eine Fachanlage notwendige Bedingung für die Gewährung von Zugang zu einem Fach einer Vielzahl von Fächern der Fachanlage durch die Fachanlage ist, an einem Gerät einer Person; und Übermitteln der Zugangsberechtigungsinformation an die Fachanlage oder Ausgabe der Zugangsberechtigungsinformation an die Person, um der Person die Bereitstellung der Zugangsberechtigungsinformation an die Fachanlage zu ermöglichen. Das Verfahren wird beispielsweise durch das Gerät der Person ausgeführt.

Gemäß jedem dieser Aspekte der Erfindung werden des Weiteren jeweils offenbart:
- Ein Computerprogramm, umfassend Programmanweisungen, die einen Prozessor zur Ausführung und/oder Steuerung des Verfahrens gemäß dem jeweiligen Aspekt der Erfindung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein.
- Eine Vorrichtung, eingerichtet zur Ausführung und/oder Steuerung des Verfahrens gemäß dem jeweiligen Aspekt der Erfindung oder umfassend jeweilige Mittel zur Ausführung und/oder Steuerung der Schritte des Verfahrens gemäß dem jeweiligen Aspekt der Erfindung. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Eines oder mehrere der Mittel können auch durch die gleiche Einheit ausgeführt und/oder gesteuert werden. Beispielsweise können eines oder mehrere der Mittel durch einen oder mehrere Prozessoren gebildet sein.
- Eine Vorrichtung, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest das Verfahren gemäß dem jeweiligen Aspekt der Erfindung auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Diese beispielhaften Aspekte der vorliegenden Erfindung können u.a. die nachfolgend beschriebenen Eigenschaften aufweisen.

Die Fachanlage umfasst eine Vielzahl von Fächern( also beispielsweise mehr als ein Fach oder mehr als zwei Fächer). Die Fächer sind beispielsweise zur Aufnahme von Sendungen (z.B. Briefe, Pakete, Päckchen), Lieferungen (z.B. gereinigte oder zu reinigende Wäsche, Gerichte von Lieferdiensten (z.B. eines Pizza- oder Sushi-Services), etc.) oder Gegenständen (z.B. Wertgegenstände, Gepäck, etc.) eingerichtet. Die Fächer sind jeweils verschließbar, beispielsweise mittels einer jeweiligen Tür oder Klappe. Beispielsweise handelt es sich bei den Fächern um im Wesentlichen quaderförmige Aufnahmebehältnisse, die an einer oder mehreren Seiten mit Türen oder Klappen versehen sind. Beispielsweise sind in der Fachanlage mehrere Fächer übereinander und/oder nebeneinander angeordnet. Beispielsweise kann die Fachanlage aus einem oder mehreren nebeneinander angeordneten Modulen bestehen, wobei in jedem Modul eines oder mehrere Fächer übereinander angeordnet sind. Die jeweiligen Türen der Fächer sind dann beispielsweise seitlich angeschlagen und lassen sich beispielsweise nach vorne öffnen. Die Fächer der Fachanlage können alle die gleiche Größe aufweisen. Alternativ können zumindest einige Fächer der Fachanlage unterschiedliche Größen aufweisen. Die Größen können beispielsweise an übliche unterschiedliche Größen von Sendungen, Lieferungen oder Gegenständen (z.B. Paketgrößen) angepasst sein. Die Fachanlage kann beispielsweise Fächer für Briefe (Brieffächer) und/oder Fächer für Pakete (Paketfächer) aufweisen. Die Brieffächer weisen beispielsweise innerhalb der Fachanlage jeweils die gleiche Größe auf, allerdings sind auch zwei oder mehr unterschiedliche Größen möglich. Die Paketfächer können in der Fachanlage mit lediglich einer gleichen oder mit unterschiedlichen Größen vertreten sein. Die Fachanlage kann beispielsweise als Paketfachanlage oder kombinierte Brief- und Paketfachanlage für ein Mehrfamilienhaus oder Bürogebäude ausgebildet sein.

Jedes der Fächer ist mit einem jeweiligen Schloss versehen. Das Schloss eines Fachs kann beispielsweise im oder am Fach angeordnet sein, beispielsweise an einer Tür (z.B. auch in Form einer Klappe) des Fachs. Wenn das Schloss nicht an der Tür angeordnet ist (also beispielsweise an einer Seitenwand des Fachs), wirkt es beispielsweise mit der Tür zusammen, indem beispielweise ein Riegel in eine Öffnung der Tür eingeführt bzw. wieder herausgezogen wird. Alternativ kann beispielsweise ein an der Tür angebrachter Haken in eine Öffnung des Schlosses einführbar sein, um dort verriegelt/entriegelt zu werden. Wenn das Schloss beispielsweise an der Tür angebracht ist, kann es beispielsweise mit den Wänden des Fachs zusammenwirken, beispielsweise durch Einführen/Herausziehen von Riegeln in Öffnungen in den Wänden oder durch Aufnahme eines an den Wänden angebrachten Hakens in dem Schloss und entsprechende Verriegelung/Entriegelung. Das Schloss eines Fachs kann beispielsweise standardmäßig in eine Verriegelungsposition zurückkehren und dann beispielsweise nur zur Entriegelung ansteuerbar sein. Nach erfolgter Entriegelung des Schlosses kann dann beispielsweise die Tür des Fachs geöffnet werden. Da das Schloss automatisch in die Verriegelungsposition zurückkehrt, kann eine Verriegelung des Fachs durch Schließen der Tür erzielt werden, beispielsweise in dem beim Schließen der Tür eine Fallenfunktion des Schlosses ausgenutzt wird.

Ein Fach der Fachanlage kann entweder offen oder geschlossen sein. Im offenen Zustand des Fachs ist das Schloss des Fachs entriegelt. Die Tür des Fachs kann dann beispielsweise ohne Gewaltanwendung durch eine Person geöffnet werden oder steht offen. Im geschlossenen Zustand des Fachs ist das Schloss des Fachs hingegen verriegelt. Die Tür des Fachs kann dann beispielsweise nicht mehr ohne Gewaltanwendung durch eine Person geöffnet werden, die nicht zur Öffnung berechtigt ist.

Das Schloss eines jeweiligen Fachs ist beispielsweise steuerbar, insbesondere in elektronischer Form. Insbesondere kann zumindest der Prozess der Verriegelns und/oder Entriegelns des Schlosses gesteuert werden. Die Steuerung des Schlosses eines Fachs kann beispielsweise durch eine Schlosssteuereinheit erfolgen, wobei entweder jedem Schloss eine eigene Schlosssteuereinheit zugeordnet ist, oder eine (beispielsweise zentrale) Schlosssteuereinheit einige (z.B. diejenigen eines Moduls der Fachanlage) oder alle Schlösser der Fachanlage steuert. In ersterem Fall werden mehrere Schlosssteuereinheiten, beispielsweise alle Schlosssteuereinheiten oder diejenigen eines oder mehrerer Module der Fachanlage, beispielsweise durch eine übergeordnete Steuereinheit gesteuert, während in letzterem Fall beispielsweise eine jeweilige Verdrahtung zwischen der Schlosssteuereinheit und jedem der von ihr gesteuerten Schlösser besteht, wobei über eine jeweilige Verdrahtung übertragene Signale oder angelegte Spannungen dann nur jeweils dem Schloss zugeordnet sind, zu dem die Verdrahtung führt, aber nicht anderen Schlössern. Alternativ ist auch die Verwendung eines Busses denkbar, an dem sowohl die Schlosssteuereinheit als auch eine Vielzahl von Schlössern elektrisch angebunden sind. Dann ist allerdings in jedem Schloss eine Einheit zur Auswertung der über den Bus erhaltenen Steuersignale erforderlich, was die Schlösser komplexer und damit teurer gestaltet als im Falle der direkten Verdrahtung.

Eine Schlosssteuereinheit (insbesondere die zentrale Schlosssteuereinheit) kann beispielsweise nicht nur die Ansteuerung des Schlosses bzw. der Schlösser besorgen, sondern auch prüfen, ob bereitgestellte Zugangsberechtigungsinformation zum Zugang zu einem Fach der Fachanlage berechtigt, und dementsprechend Zugang zu dem Fach gewähren (z.B. durch Entriegelung der Tür des Fachs) oder verweigern (z.B. indem keine Entriegelung der Tür des Fachs erfolgt).

Die Bereitstellung der Zugangsberechtigungsinformation an die Fachanlage erfolgt beispielsweise durch ein Gerät einer Person, insbesondere ein tragbares Gerät der Person, beispielsweise durch drahtgebundene oder drahtlose Übermittlung (also beispielsweise Übertragung), beispielsweise durch elektromagnetische (mit dem Sonderfall optische), elektrische oder magnetische Signale oder Felder, oder über eine Person, an die die Zugangsberechtigungsinformation über ein Gerät, insbesondere ein portables Gerät, ausgegeben wird (beispielsweise optisch und/oder akustisch präsentiert) wird, und die dann beispielsweise die Zugangsberechtigungsinformation über eine Benutzerschnittstelle der Fachanlage der Fachanlage bereitstellt (beispielsweise durch Eingabe (z.B. Eintippen) in die Benutzerschnittstelle, oder durch Sprechen in eine beispielsweise auf Spracherkennung beruhende Benutzerschnittstelle). Die Bereitstellung der Zugangsberechtigungsinformation an die Fachanlage durch das Gerät kann beispielsweise auf Bluetooth oder Near Field Communication (NFC) beruhen. Entsprechend der Bereitstellung der Zugangsberechtigungsinformation wird diese an der Fachanlage erhalten, also beispielsweise - insbesondere über eine Benutzerschnittstelle oder mittels drahtgebundener oder drahtloser Übertragung - empfangen.

Das Gerät, durch das oder unter Verwendung dessen (beispielsweise durch die Person) die Bereitstellung der Zugangsberechtigungsinformation an die Fachanlage erfolgt, erhält (also beispielsweise empfängt) die Zugangsberechtigungsinformation beispielsweise durch Kommunikation mit einer Vorrichtung, die die Zugangsberechtigungsinformation erzeugt hat oder nach deren Erzeugung erhalten hat. Die Vorrichtung kann beispielsweise Teil des oben bereits beschriebenen Zentralsystems sein, sie kann beispielsweise ein Server sein. Das Gerät erhält die Zugangsberechtigungsinformation beispielsweise durch drahtgebundene oder drahtlose Übertragung (insbesondere durch zumindest teilweise auf zellularem Mobilfunk (also beispielsweise GSM, E-GSM, UMTS, LTE oder 5G) beruhender Übertragung). Die Übertragungstechnik ist beispielsweise dergestalt ausgewählt, dass das Gerät bei Erhalten der Zugangsberechtigungsinformation von der Vorrichtung entfernt sein kann, insbesondere mehr als 500 m, 1 km, 2 km oder 5 km.

Die Bereitstellung der Zugangsberechtigungsinformation an die Fachanlage ist notwendige Bedingung für die Gewährung von Zugang zu einem Fach der Fachanlage, insbesondere, weil ferner ein positives Ergebnis einer Prüfung der Zugangsberechtigungsinformation, insbesondere deren Authentizität und/oder Integrität, an der Fachanlage notwendige Bedingung für die Gewährung von Zugang zu dem Fach der Fachanlage ist.

Die Zugangsberechtigungsinformation enthält insbesondere Information, anhand derer an der Fachanlage geprüft werden kann, ob bei Bereitstellung der Zugangsberechtigungsinformation Zugang zu einem Fach der Fachanlage gewährt werden darf oder nicht, beispielsweise weil die Fachanlage die Zugangsberechtigungsinformation nach Prüfung für integer (unversehrt, also seit Erzeugung nicht manipuliert) und authentisch (von einer bestimmten Entität, insbesondere einer von der Fachanlage als vertrauenswürdig eingestuften Entität, stammend) hält. Beispielsweise wird zumindest ein Teil der Zugangsberechtigungsinformation von einer Entität unter Verwendung eines ersten Schlüssels (beispielsweise einer Information), erzeugt, der insbesondere nur der Entität oder nur der Entität und der Fachanlage bekannt ist. Der Schlüssel kann entweder spezifisch für die Fachanlage sein, also lediglich einer Fachanlage, aber keiner anderen Fachanlage zugeordnet sein, oder zumindest für zwei oder mehr Fachanlagen gleich gewählt sein. Es ist auch denkbar, dass der Schlüssel nicht lediglich fachanlagenspezifisch ist, sondern sogar spezifisch (einmalig) für ein Fach der Fachanlage ist. Dann ist beispielsweise jedem Fach einer Fachanlage ein anderer erster Schlüssel zugeordnet, der auch keinem anderen Fach einer anderen Fachanlage zugeordnet ist. Nachfolgend wird beispielhaft davon ausgegangen, dass der erste Schlüssel für jede Fachanlage einmalig gewählt ist, also jeder Fachanlage ein anderer erster Schlüssel zugeordnet ist.

Anhand zumindest dieses unter Verwendung des ersten Schlüssels erzeugten Teils der Zugangsberechtigungsinformation und einem zweiten Schlüssel, der beispielsweise mit dem ersten Schlüssel ein symmetrisches oder asymmetrisches Schlüsselpaar bildet, kann in der Fachanlage dann beispielsweise geprüft werden, ob die Zugangsberechtigungsinformation integer und authentisch ist. Beispielsweise umfasst die Zugangsberechtigungsinformation einen oder mehrere Zugangsberechtigungsparameter und eine unter Verwendung des ersten Schlüssels und der Zugangsberechtigungsparameter erzeugte kryptographische Information (z.B. einen Message Authentication Code (MAC)), so dass nach Erhalt dieser Zugangsberechtigungsinformation die Fachanlage die kryptographische Information unter Verwendung des zweiten Schlüssels (der in diesem Beispiel dem ersten Schlüssel entspricht) erneut berechnen und mit der erhaltenen kryptographischen Information vergleichen kann. Bei Übereinstimmung beider kryptographischer Informationen kann von der Integrität und Authentizität der Zugangsberechtigungsinformation ausgegangen werden. Die Zugangsberechtigungsparameter können beispielsweise umfassen: einen Gültigkeitszeitraum der Zugangsberechtigungsinformation, innerhalb dessen die Zugangsberechtigungsinformation gültig ist; eine Kennung der Fachanlage, für die die Zugangsberechtigungsinformation gültig ist; eine Kennung des Fachs der Fachanlage, für die die Zugangsberechtigungsinformation gültig ist; eine Kennung des Geräts, durch das oder unter Verwendung dessen die Zugangsberechtigungsinformation ausschließlich bereitgestellt werden darf; und/oder eine Kennung eines Programms (z.B. eine App), durch das oder unter Verwendung dessen die Zugangsberechtigungsinformation ausschließlich bereitgestellt werden darf. Die Kennung der Fachanlage und die Kennung des Fachs der Fachanlage können auch in einer einzigen Information enthalten sein.

Eine weitere notwendige Bedingung für die Gewährung von Zugang zu dem Fach der Fachanlage kann dann beispielsweise sein, dass die Prüfung einiger oder aller einer vordefinierten Menge der Zugangsberechtigungsparameter gegen in der Fachanlage zumindest in Zeitpunkt der Prüfung vorhandener jeweiliger Referenzinformation erfolgreich verlaufen ist. Beispielsweise kann vordefiniert sein, dass die Kennungen der Fachanlage gemäß der Zugangsberechtigungsinformation zu der lokal gespeicherten Kennung der Fachanlage korrespondieren muss, die Kennung des Fachs gemäß der Zugangsberechtigungsinformation zu einem vorhandenen Fach der Fachanlage korrespondieren muss, eine an der Fachanlage vorhandene aktuelle Zeit (wobei die Zeit auch ein Datum umfassen oder sein kann) in dem Gültigkeitszeitraum gemäß der Zugangsberechtigungsinformation liegen muss und eine Kennung des Geräts oder eines Programms auf dem Gerät gemäß der Zugangsberechtigungsinformation mit einer Kennung des Geräts oder eines Programms, durch das oder unter Verwendung dessen die Zugangsberechtigungsinformation bereitgestellt wurde, übereinstimmen muss. Beispielsweise wird die Kennung des Geräts oder des Programms bei der Erzeugung von kryptographischer Information (z.B. einem MAC) berücksichtigt, aber die Kennung des Geräts oder des Programms nicht in die Zugangsberechtigungsinformation aufgenommen. Die Kennung des Geräts oder des Programms kann dann beispielsweise später der Zugangsberechtigungsinformation hinzugefügt werden, beispielsweise von dem Gerät, das die (unvollständige) Zugangsberechtigungsinformation empfängt und dann (in vervollständigter Form, also mit der Kennung des Geräts oder des Programms) an die Fachanlage übermittelt oder an einen Nutzer zur Bereitstellung an die Fachanlage ausgibt. Dadurch kann sichergestellt werden, dass die (vervollständigte) Zugangsberechtigungsinformation von dem korrekten Gerät an die Fachanlage übermittelt oder dem Nutzer zur Bereitstellung an die Fachanlage übermittelt wurde.

Die Gewährung des Zugangs zu dem Fach kann zusätzlich eine oder mehrere weitere erfolgreich verlaufende Prüfungen erfordern, beispielsweise ein erfolgreich verlaufendes Challenge-Response-Verfahren zwischen dem Gerät, mit dem die Zugangsberechtigungsinformation bereitgestellt wird, und der Fachanlage. Das Challenge-Response-Verfahren dient beispielsweise der Authentisierung des Geräts gegenüber der Fachanlage. Das Challenge-Response-Verfahren kann zumindest teilweise auf zusätzlich zu der Zugangsberechtigungsinformation, beispielsweise zusammen mit der Zugangsberechtigungsinformation oder als Teil der Zugangsberechtigungsinformation an die Fachanlage übermittelter Information beruhen.

Weitere Vorteile der beispielhaften Aspekte der Erfindung werden nachfolgend anhand beispielhafter Ausführungsformen beschrieben, deren Offenbarung allerdings für alle drei Aspekte der Erfindung gleichermaßen gelten soll.

Gemäß einer beispielhaften Ausführungsform aller Aspekte der Erfindung steht bereits bei Erzeugung der Zugangsberechtigungsinformation fest, um welches der Fächer der Fachanlage es sich bei dem Fach konkret handelt, und die Zugangsberechtigungsinformation wird zumindest unter Verwendung einer das Fach identifizierenden Information dergestalt erzeugt, dass das Fach unter Verwendung der Zugangsberechtigungsinformation durch die Fachanlage ermittelbar ist. Das Verfahren gemäß dem zweiten Aspekt der Erfindung kann dann insbesondere das Ermitteln des Fachs unter Verwendung der Zugangsberechtigungsinformation umfassen.

Die das Fach identifizierende Information gibt dann beispielsweise nicht lediglich den Fachtyp (etwa Brieffach vs. Paketfach), sondern identifiziert konkret das Fach. Die das Fach identifizierende Information ist beispielsweise eine Kennung für das Fach oder eine kombinierte Kennung, die sowohl die Fachanlage als auch das darin enthaltene Fach kennzeichnet. Die Zugangsberechtigungsinformation kann beispielsweise ferner unter Verwendung einer die Fachanlage identifizierenden Information erzeugt werden. Die das Fach identifizierende Information ist insbesondere keine lediglich eine Person, ein Gerät oder eine Zugangsberechtigungsinformation identifizierende oder dieser/diesem zugeordnete Information, aus der dann mittelbar (unter Verwendung einer Zuordnungstabelle, die einer Zuordnung von Fächern zu Personen/Geräten/Zugangsberechtigungsinformationen enthält) auf das Fach geschlossen werden kann, sondern identifiziert das Fach der Fachanlage insbesondere unmittelbar. Die das Fach identifizierende Information kann beispielsweise bei einer Vielzahl von Zugangsberechtigungsinformationen, die sich auf dasselbe Fach der Fachanlage, beziehen, aber unterschiedlichen Personen und/oder Geräten (mit denen oder unter Verwendung von denen die Zugangsberechtigungsinformation der Fachanlage bereitgestellt wird) zugeordnet sind, jeweils identisch sein.

Die das Fach identifizierende Information ist beispielsweise in der Zugangsberechtigungsinformation enthalten, beispielsweise als Zugangsberechtigungsparameter wie oben bereits erläutert wurde. Die Zugangsberechtigungsinformation enthält beispielsweise Prüfinformation, die teilweise auf der das Fach identifizierenden Information beruht.

Die Fachanlage ist insbesondere hinsichtlich der Ermittlung des Fachs unter Verwendung der Zugangsberechtigungsinformation zustandslos. Die Ermittlung des Fachs, zu dem Zugang gewährt werden soll, ist damit insbesondere unabhängig von in der Fachanlage (insbesondere nach Inbetriebnahme und/oder sich im Betrieb ändernder) gespeicherter Information (z.B. einer Zuordnungstabelle), mit Ausnahme von Information, wie etwa dem bereits erläuterten zweiten Schlüssel, die zur Entschlüsselung und/oder Prüfung der Zugangsberechtigungsinformation erforderlich ist. Die Ermittlung des Fachs ist insbesondere unabhängig von Information, die von einer aktuellen Fachbelegung der Fachanlage abhängt oder diese widerspiegelt.

Die Berücksichtigung der das Fach konkret identifizierenden Information bei der Erzeugung der Zugangsberechtigungsinformation bildet die Grundlage für eine zustandslose Fachanlage, die insbesondere gegen Datenverlust aufgrund von Stromausfällen oder sonstigen Beschädigungen oder Fehlfunktionen robuster ist als zustandsbehaftete Fachanlagen und darüber hinaus eine weniger komplexe Hard- und Software erfordert, zum Einen hinsichtlich der Sicherung von Zuordnungstabellen gegen Verlust und zum Anderen hinsichtlich der Auswertung derartiger Zuordnungstabellen.

Gemäß einer beispielhaften Ausführungsform des ersten Aspekts der Erfindung wird das Fach vor der Erzeugung der Zugangsberechtigungsinformation ausgewählt und die Zugangsberechtigungsinformation zumindest unter Verwendung von das ausgewählte Fach identifizierender Information erzeugt, wobei das Fach ausgewählt wird von einer Person, die Zugang zu dem Fach erhalten will, von einem Gerät der Person, von der Fachanlage, oder von einem Zentralsystem, das an der Verwaltung einer Vielzahl von Fachanlagen, umfassend die Fachanlage, und/oder an der Erzeugung der Zugangsberechtigungsinformation zumindest beteiligt ist. Gemäß einer beispielhaften Ausführungsform des zweiten Aspekts der Erfindung kann das Verfahren gemäß dem zweiten Aspekt der Erfindung ferner umfassen: Auswählen des Fachs und Ausgeben der das ausgewählte Fach identifizierenden Information, so dass diese bei der Erzeugung der Zugangsberechtigungsinformation verwendet werden kann; oder Ermöglichen einer Auswahl des Fachs durch eine Person oder ein Gerät einer Person. Gemäß einer beispielhaften Ausführungsform des dritten Aspekts der Erfindung umfasst das Verfahren gemäß dem dritten Aspekt der Erfindung ferner: Auswählen des Fachs und Ausgeben der das ausgewählte Fach identifizierenden Information, so dass diese bei der Erzeugung der Zugangsberechtigungsinformation verwendet werden kann; oder Ermöglichen einer Auswahl des Fachs durch eine Person, und Ausgeben der das ausgewählte Fach identifizierenden Information, so dass diese bei der Erzeugung der Zugangsberechtigungsinformation verwendet werden kann.

Die Auswahl erfolgt also beispielsweise durch eine Person, beispielsweise über eine Benutzerschnittstelle der Fachanlage oder eine Benutzerschnittstelle eines Geräts der Person. Die Fachanlage kann beispielsweise zur Ermittlung ihres aktuellen Fachbelegungszustands (der beispielsweise repräsentiert, welche Fächer belegt sind, oder welche Fächer unbelegt sind) eingerichtet sein (beispielsweise durch in den Fächern vorhandene Sensoren (beispielsweise Gewichtssensoren, Ultraschallsensoren oder optische Sensoren), die die Belegung eines jeweiligen Faches feststellen können). Der aktuelle Fachbelegungszustand, oder lediglich die unbelegten Fächer, kann/können dann auf der Benutzerschnittstelle der Fachanlage einer Person angezeigt werden, und der Person eine Auswahl ermöglicht werden. Die das Fach identifizierende Information wird dann beispielsweise (z.B. nach Eingabe in das Gerät durch die Person) mittels des Geräts der Person an eine Vorrichtung (z.B. des Zentralsystems) übermittelt, die die Zugangsberechtigungsinformation erzeugt, oder an eine Vorrichtung übermittelt, die diese Information an die Vorrichtung, die die Zugangsberechtigungsinformation erzeugt, übermittelt. Alternativ kann Information zum Fachbelegungszustand von der Fachanlage an das Gerät übermittelt und der Person dann auf dem Gerät die Auswahl des Fachs ermöglicht werden. Auch in diesem Szenario wird die das Fach identifizierende Information dann beispielsweise mittels des Geräts der Person an eine Vorrichtung (z.B. des Zentralsystems) übermittelt, die die Zugangsberechtigungsinformation erzeugt, oder an eine Vorrichtung übermittelt, die diese Information an die Vorrichtung, die die Zugangsberechtigungsinformation erzeugt, übermittelt.

Alternativ kann die Auswahl des Fachs durch die Fachanlage erfolgen und die das Fach identifizierende Information dann beispielsweise von der Fachanlage an ein Gerät einer Person übermittelt werden, um dann mittels des Geräts der Person an eine Vorrichtung (z.B. eines Zentralsystems) übermittelt zu werden, die die Zugangsberechtigungsinformation erzeugt, oder an eine Vorrichtung übermittelt zu werden, die diese Information an die Vorrichtung, die die Zugangsberechtigungsinformation erzeugt, übermittelt.

Weiterhin alternativ kann die Auswahl des Fachs durch ein Gerät einer Person erfolgen, beispielsweise basierend auf - wie oben bereits beschriebener - an dem Gerät von der Fachanlage erhaltener Information zum aktuellen Fachbelegungszustand.

Schließlich kann die Auswahl des Fachs auch durch das Zentralsystem erfolgen, beispielsweise basierend auf dem aktuellen Fachbelegungszustand der Fachanlage. Der aktuelle Fachbelegungszustand wird entweder von dem Zentralsystem selbst nachgehalten, insbesondere basierend auf Information von jeweiligen Geräten von einer oder mehreren Personen, die die Fachanlage benutzen (beispielsweise Information, dass ein Fach belegt wurde und Information, dass ein belegtes Fach jetzt wieder frei wurde), oder basierend auf einer Information zum aktuellen Fachbelegungsstatus, der von der Fachanlage erhoben wurde und über ein Gerät einer Person an das Zentralsystem übermittelt wird. Vorteilhaft kann bei der Auswahl des Fachs durch das Zentralsystem zusätzlich zum Fachbelegungszustand die Reservierung einer oder mehrerer Fächer der Fachanlage berücksichtigt werden, beispielsweise erfolgt die Auswahl des Fachs dann unter Berücksichtigung des aktuellen Fachbelegungs- und Fachreservierungszustands. Die Reservierung eines Fachs kann beispielsweise dann vorliegen, wenn für dieses Fach angeforderte Zugangsberechtigungsinformation erzeugt oder deren Erzeugung angestoßen wurde, aber noch keine Bestätigung am Zentralsystem erhalten wurde, dass das Fach (insbesondere nach Nutzung der angeforderten Zugangsberechtigungsinformation) belegt worden ist (beispielsweise da eine Sendung oder Lieferung in das Fach eingelegt und das Fach daraufhin wieder verschlossen wurde). Die Berücksichtigung des Fachreservierungszustands bei der Auswahl des Fachs ist insbesondere dann vorteilhaft, wenn mehrere Personen gleichzeitig Zugang zu Fächern der Fachanlage erhalten müssen und in etwa gleichzeitig Zugangsberechtigungsinformation für ein (durch das Zentralsystem auszuwählendes) Fach anfordern. Würde lediglich der tatsächliche Belegungszustand der Fächer berücksichtigt, könnte ein Fach mehrfach ausgewählt werden, insbesondere wenn eine zweite Anforderung für Zugangsberechtigungsinformation erhalten wird, nachdem auf eine erste Anforderung hin Zugangsberechtigungsinformation für ein Fach erzeugt wurde aber das Fach nach Verwendung der Zugangsberechtigungsinformation noch nicht als belegt gemeldet wurde und dann für die zweite Anforderung noch als Auswahlkandidat zur Verfügung steht.

Die Auswahl des Fachs kann beispielsweise unter Beachtung von Informationen zur Größe und/oder zum Gewicht einer Sendung oder Lieferung, die in das Fach eingelegt werden soll, erfolgen. Diese Informationen können beispielsweise von einer Person ermittelt (z.B. geschätzt oder von der Sendung oder Lieferung abgelesen) werden und der Entität, die die Auswahl des Fachs vornimmt, bereitgestellt werden (beispielsweise durch Eingabe in die Entität, die die Auswahl vornimmt, oder durch Eingabe in ein Gerät, das die Information an eine Entität, die die Auswahl vornimmt, übermittelt). Alternativ kann die Information durch ein Gerät einer Person von einer Sendung oder Lieferung erfasst (z.B. abgescannt oder mittels elektrischer, magnetischer oder elektromagnetischer Signale oder Felder übertragen) werden und dann entweder von dem Gerät selbst bei der Auswahl berücksichtigt werden oder durch das Gerät einer Entität, die die Auswahl vornimmt, bereitgestellt werden (durch mittelbar oder unmittelbare Übertragung an diese Entität). Beispielsweise wird, falls unbelegte Fächer verschiedener Größen vorhanden sind, das kleinste der Fächer ausgewählt, in das die Sendung oder die Lieferung passt, um nicht unnötig Lagerplatz zu blockieren. Zusätzlich oder alternativ kann bei der Auswahl des Fachs das Gewicht der Sendung oder Lieferung berücksichtigt werden und beispielsweise für Sendungen oder Lieferung mit einem Gewicht oberhalb eines vordefinierten Schwellwerts bei Vorhandensein mehrerer unbelegter Fächer das bodennaheste Fach ausgewählt.

Das Auswählen des Fachs durch das Zentralsystem oder das Erhalten von das Fach identifizierender Information (insbesondere von einem Gerät einer Person) kann beispielsweise Verfahrensschritt des Verfahrens gemäß dem ersten Aspekt der Erfindung sein.

Gemäß einer beispielhaften Ausführungsform des ersten Aspekts der Erfindung wird die Zugangsberechtigungsinformation erzeugt, nachdem eine Kennung der Fachanlage durch ein Gerät einer Person, die Zugang zu dem Fach der Fachanlage erhalten will, erfasst oder erhalten wurde, wobei das Verfahren gemäß dem ersten Aspekt der Erfindung ferner das Erhalten (beispielsweise Empfangen) der von dem Gerät erfassten oder erhaltenen Kennung umfasst, und diese bei der Erzeugung der Zugangsberechtigungsinformation berücksichtigt wird. Gemäß einer beispielhaften Ausführungsform des zweiten Aspekts der Erfindung umfasst das Verfahren gemäß dem zweiten Aspekt der Erfindung ferner das Bereitstellen oder Ausgeben (z.B. mittels drahtloser Übertragung) einer Kennung der Fachanlage zur Erfassung oder zum Erhalten durch ein Gerät einer Person. Gemäß einer beispielhaften Ausführungsform des dritten Aspekts der Erfindung umfasst das Verfahren gemäß dem dritten Aspekt der Erfindung ferner: Erfassen oder Erhalten einer Kennung der Fachanlage; und Ausgeben (z.B. durch drahtgebundene oder drahtlose Übertragung) der erfassten oder erhaltenen Kennung der Fachanlage (beispielsweise an das Zentralsystem), so dass diese bei der Erzeugung der Zugangsberechtigungsinformation berücksichtigt werden kann.

Der Zugang kann beispielsweise erforderlich sein zum Einstellen in oder Abholen einer Sendung oder Lieferung aus dem Fach. Das Erfassen/Erhalten der Kennung von der Fachanlage kann beispielsweise optisch (z.B. durch Abscannen einer auf der Fachanlage angebrachten Information, insbesondere eines 2D- oder 3D Barcodes) oder mittels drahtloser Übertragung, die auf elektrischen, magnetischen oder elektromagnetischen Signalen oder Feldern beruht, erfolgen, also beispielsweise via Bluetooth oder NFC. Die Kennung der Fachanlage kann beispielsweise in unidirektionaler Kommunikation (z.B. durch einen die Kennung aussendenden Beacon) oder bidirektionaler Kommunikation (beispielsweise in Reaktion auf eine durch ein Gerät an die Fachanlage gesendete Anforderung der Kennung) erhalten werden. Das Erfassen/Erhalten der Kennung der Fachanlage findet beispielsweise am Ort der Fachanlage oder auf dem Weg einer Person (z.B. eines Zustellers oder Nutzers der Fachanlage) zur Fachanlage statt, also beispielsweise in einem Umkreis von weniger als 500m, 100m, 50m oder 10m von der Fachanlage.

Die Kennung wird beispielsweise dadurch bei der Erzeugung der Zugangsberechtigungsinformation berücksichtigt, dass ein für die Erzeugung der Zugangsberechtigungsinformation erforderlicher Schlüssel, der für jede Fachanlage anders gewählt ist, anhand der Kennung ausgewählt wird. Die Kennung selbst muss dann beispielsweise nicht Bestandteil der Zugangsberechtigungsinformation sein. Alternativ kann die Kennung in die Zugangsberechtigungsinformation eingebettet sein.

Beispielsweise erfolgt die Erzeugung der Zugangsberechtigungsinformation oder wird ausgelöst in Reaktion auf eine Anfrage von einem Gerät einer Person (die insbesondere Zugang zu einem Fach der Fachanlage erhalten möchte), wobei die Anfrage dann zumindest die Kennung der Fachanlage enthält. Die Anfrage kann auch weitere Informationen enthalten, beispielsweise Information über eine in das Fach zu deponierende Sendung oder Lieferung (z.B. über deren Größe und/oder deren Gewicht und/oder deren Priorität) falls die Auswahl des Fachs durch das Zentralsystem erfolgt, wobei diese Information dann bei der Auswahl des Fachs berücksichtigt werden kann) und/oder über das ausgewähltes Fach (z.B. wenn die Auswahl des Fach lokal, also durch die Fachanlage, eine Person (z.B. einen Zusteller oder Lieferanten einer Sendung oder Lieferung oder einen Absender einer Sendung, der die Sendung zur Abholung in ein Fach deponiert hat) oder ein Gerät der Person) erfolgt.

Gemäß einer beispielhaften Ausführungsform des ersten Aspekts der Erfindung ist eine weitere notwendige Bedingung für die Gewährung des Zugangs zu dem Fach der Fachanlage durch die Fachanlage, dass ein Zeitpunkt der Bereitstellung der Zugangsberechtigungsinformation an die Fachanlage und/oder ein Zeitpunkt der Auswertung der der Fachanlage bereitgestellten Zugangsberechtigungsinformation durch die Fachanlage innerhalb eines beschränkten Gültigkeitszeitraums liegt/liegen, und die Zugangsberechtigungsinformation wird dergestalt erzeugt, dass der beschränkte Gültigkeitszeitraum mit der Zugangsberechtigungsinformation assoziiert ist. Gemäß einer beispielhaften Ausführungsform des zweiten Aspekts der Erfindung wurde die Zugangsberechtigungsinformation dergestalt erzeugt, dass ein beschränkter Gültigkeitszeitraum mit der Zugangsberechtigungsinformation assoziiert ist, und das Verfahren gemäß dem zweiten Aspekt der Erfindung umfasst ferner das Prüfen, ob ein Zeitpunkt der Bereitstellung der Zugangsberechtigungsinformation an die Fachanlage und/oder ein Zeitpunkt der Auswertung der der Fachanlage bereitgestellten Zugangsberechtigungsinformation durch die Fachanlage innerhalb des beschränkten Gültigkeitszeitraums liegt/liegen, wobei eine weitere notwendige Bedingung für die Gewährung des Zugangs zu dem Fach der Fachanlage durch die Fachanlage ist, dass das Prüfen ein positives Ergebnis ergibt.

Der Gültigkeitszeitraum ist beispielsweise dadurch mit der Zugangsberechtigungsinformation assoziiert, dass er bei deren Erzeugung berücksichtigt wird und/oder in der Zugangsberechtigungsinformation enthalten ist. Der Gültigkeitszeitraum z.B. weniger als 1 Tag, insbesondere weniger als 1 h, 10 min od. 5 min betragen. Der Gültigkeitszeitraum kann für unterschiedliche Typen von Personen, die Zugang zu einem Fach der Fachanlage benötigen, unterschiedlich gewählt sein, beispielsweise für Zusteller von Sendungen oder Lieferanten von Lieferungen kürzer gewählt sein als für die Empfänger der Sendungen oder Lieferungen. Der Gültigkeitszeitraum kann z.B. mit dem Zeitpunkt der Erstellung der Zugangsberechtigungsinformation beginnen. Die Länge des Gültigkeitszeitraums kann beispielsweise unter Berücksichtigung der für die Übermittlung der Zugangsberechtigungsinformation von einer erzeugenden oder ausgebenden Einheit an ein Gerät einer Person, die Zugang zu einem Fach der Fachanlage benötigt, und der Übermittlung der Zugangsberechtigungsinformation von diesem Gerät an die Fachanlage üblicherweise (also im Mittel) benötigten Zeitdauer bestimmt werden (beispielsweise unter Einplanung eines zeitlichen Sicherheitspuffer).

Durch den beschränkten Gültigkeitszeitraum, insbesondere bei starker Beschränkung auf etwa 5 min) kann Missbrauch mit entwendeten Geräten, auf denen Zugangsberechtigungsinformation gespeichert ist, und Missbrauch mit abgefangenen Zugangsberechtigungsinformationen entgegengewirkt werden. Eine Zugangsberechtigungsinformation ermöglicht also nur für einen kurzen Zeitraum Zugang zu einem konkreten Fach der Fachanlage. Nach dem Ablauf des Zeitraums muss eine neue Zugangsberechtigungsinformation erzeugt werden. Die Anforderung der neuen Zugangsberechtigungsinformation (z.B. durch einen Zusteller oder Lieferanten) kann allerdings vorteilhaft an für unberechtigte Dritte schwer erfüllbare Voraussetzungen geknüpft sein, beispielsweise muss gegenüber dem Gerät, mit dem die neue Zugangsberechtigungsinformation (beispielsweise bei einem Zentralsystem) angefordert wird, eine Authentisierung erfolgen, und/oder die Erzeugung der neuen Zugangsberechtigungsinformation für ein Fach kann nur durch eine Bestätigung von einem Gerät eines Zustellers oder Lieferanten ausgelöst werden, dass in dieses Fach eine Sendung oder Lieferung eingestellt wurde. Um den Missbrauch mit angefangenen Zugangsberechtigungsinformation zu unterbinden, kann die Zugangsberechtigungsinformation zusätzlich an ein Gerät oder ein Programm des Geräts gebunden sein (beispielsweise durch eine Kennung (z.B. eine MAC-Adresse oder Telefonnummer) des Geräts, die bei der Erzeugung der Zugangsberechtigungsinformation berücksichtigt wird), und es kann eine weitere notwendige Voraussetzung für die Gewährung des Zugangs zu dem Fach sein, dass die bei der Erzeugung der Zugangsberechtigungsinformation berücksichtige Kennung mit der Kennung des Geräts (oder des Programms), mit der die Zugangsberechtigungsinformation bereitgestellt oder an eine Person ausgegeben wird, übereinstimmt.

Gemäß einer beispielhaften Ausführungsform des ersten Aspekts der Erfindung sind die Zugangsberechtigungsinformation und die Fachanlage so ausgebildet, dass die Fachanlage zur Vornahme einer Prüfung, ob aufgrund der Zugangsberechtigungsinformation Zugang zu dem Fach der Fachanlage gewährt werden kann, außer der Zugangsberechtigungsinformation keine weitere Information von externen Einheiten empfangen muss und/oder dass die Fachanlage zur Vornahme dieser Prüfung ausschließlich von demjenigen Gerät, von dem die Fachanlage die Zugangsberechtigungsinformation erhält, Information erhält. Gemäß einer beispielhaften Ausführungsform des zweiten Aspekts der Erfindung umfasst das Verfahren gemäß dem zweiten Aspekt der Erfindung ferner das Prüfen, ob aufgrund der Zugangsberechtigungsinformation Zugang zu dem Fach der Fachanlage gewährt werden kann, wobei die Zugangsberechtigungsinformation und die Fachanlage so ausgebildet sind, dass die Fachanlage zur Vornahme dieses Prüfens außer der Zugangsberechtigungsinformation keine weitere Information von externen Einheiten empfangen muss und/oder dass die Fachanlage zur Vornahme dieses Prüfens ausschließlich von demjenigen Gerät, von dem die Fachanlage die Zugangsberechtigungsinformation empfängt, Information empfängt.

Insbesondere kann die Fachanlage spätestens bei Auslieferung oder Aufstellung an ihrem Standort bereits mit sämtlicher Information versehen worden sein um entscheiden zu können, ob aufgrund der Zugangsberechtigungsinformation Zugang zu dem Fach der Fachanlage gewährt werden kann. Diese Information kann insbesondere den oben bereits erläuterten zweiten Schlüssel umfassen, der mit dem ersten Schlüssel, der bei der Erzeugung der Zugangsberechtigungsinformation verwendet wird, ein symmetrisches oder asymmetrisches Schlüsselpaar bildet. Der zweite Schlüssel ist insbesondere für jede Fachanlage einer Vielzahl von Fachanlagen (beispielsweise für alle Fachanlagen, die von dem Zentralsystem verwaltet werden) unterschiedlich. Diese Information kann beispielsweise auch eine Kennung der Fachanlage und/oder eine insbesondere unveränderliche Vorschrift umfassen, die festlegt, welche Fachkennung (die z.B. in der Zugangsberechtigungsinformation enthalten ist oder bei deren Erzeugung berücksichtigt wird) welches physikalische Fach identifiziert.

Gemäß einer beispielhaften Ausführungsform aller Aspekte der Erfindung unterstützt die Fachanlage weder LAN-Verbindungen, WLAN-Verbindungen noch zellulare Mobilfunkverbindungen. Die Fachanlage ist also insbesondere "offline", verfügt also über keine Verbindung zum Internet und/oder zum Zentralsystem. Die Fachanlage kann dann beispielsweise nur mit portablen Geräten von Personen kommunizieren, die Zugang zu Fächern der Fachanlage begehren, beispielsweise über NFC oder Bluetooth.

Gemäß einer beispielhaften Ausführungsform aller Aspekte der Erfindung unterhält die Fachanlage keine Kommunikation mit einem Zentralsystem, das an der Verwaltung einer Vielzahl von Fachanlagen, umfassend die Fachanlage, und/oder an der Erzeugung der Zugangsberechtigungsinformation zumindest beteiligt ist. Insbesondere handelt es sich bei der Zugangsberechtigungsinformation nicht um auf Zufallsinformation beruhenden One-Time-Passwords (OTPs), die auf unterschiedlichen Kommunikationskanälen (wobei einer der Kommunikationskanäle auf dem Gerät der Person, die Zugang zu dem Fach der Fachanlage begehrt, beruht) zur Fachanlage übermittelt und dort verglichen werden um festzustellen, ob Zugang zu einem Fach gewährt werden kann.

Gemäß einer beispielhaften Ausführungsform des ersten Aspekts der Erfindung wird die Erzeugung der Zugangsberechtigungsinformation in Reaktion auf eine Anfrage von einem Gerät einer Person vorgenommen oder ausgelöst, die Zugang zu einem (insbesondere dem) Fach der Fachanlage benötigt (und sich insbesondere am Ort der Fachanlage oder auf dem Weg zu der Fachanlage befindet), das Verfahren gemäß dem ersten Aspekt der Erfindung ferner umfassend: Übermitteln (z.B. durch Übertragen) oder Bewirken des Übermittelns der Zugangsberechtigungsinformation nach ihrer Erzeugung insbesondere automatisch an das Gerät, so dass eine Bereitstellung der Zugangsberechtigungsinformation durch das Gerät oder die Person an die Fachanlage ermöglicht wird. Gemäß einer beispielhaften Ausführungsform des dritten Aspekts der Erfindung umfasst das Verfahren gemäß dem dritten Aspekt der Erfindung ferner: Ausgeben (z.B. durch Übertragung) einer Anfrage, mit der die Zugangsberechtigungsinformation angefordert wird, wobei das Erhalten der Zugangsberechtigungsinformation dadurch erfolgt, dass die Zugangsberechtigungsinformation in Reaktion auf die Anfrage übermittelt wird; oder Ausgeben (z.B. durch Übertragung) einer Anfrage, mit der die Erzeugung der Zugangsberechtigungsinformation angefordert wird, wobei das Erhalten der Zugangsberechtigungsinformation dadurch erfolgt, dass die Zugangsberechtigungsinformation nach der Ausgabe der Anfrage und der Erzeugung der Zugangsberechtigungsinformation durch Ausgabe einer Abfrage abgefragt wird. Die Ausgabe der Abfrage wird beispielsweise ausgelöst durch den Erhalt einer Benachrichtigung, dass die Zugangsberechtigungsinformation erzeugt wurde, und/oder enthält Information, die in einer derartigen Benachrichtigung enthalten war.

Die Person ist beispielsweise ein Zusteller, der eine Sendung zustellen oder abholen möchte, oder ein Lieferant, der eine Lieferung abliefern möchte, oder ein Versender, der eine Sendung in einem Fach zur Abholung deponieren möchte.

Die Anfrage enthält z.B. die Kennung der Fachanlage und/oder die Identifizierung eines ausgewählten Fachs und/oder Charakteristika der gewünschten Fachart (Größe, Kühlung erforderlich, behindertengerecht). Die Charakteristika der Fachart können beispielsweise Informationen sein, die von der Sendung oder Lieferung erfassbar sind (beispielsweise durch drahtlose Erfassung, z.B. durch Abscannen) oder aus derartiger Information ableitbar sind.

Gemäß einer beispielhaften Ausführungsform des ersten Aspekts der Erfindung wird die Erzeugung der Zugangsberechtigungsinformation in Reaktion auf eine von einem Gerät einer Person erhaltene Information, dass, insbesondere durch die Person, eine Sendung oder Lieferung in das Fach eingelegt und/oder das Fach geschlossen wurde, vorgenommen oder ausgelöst, und das Verfahren gemäß dem ersten Aspekt der Erfindung umfasst ferner das Erhalten der Information, dass eine Sendung oder Lieferung in das Fach eingelegt und/oder das Fach geschlossen wurde. Gemäß einer beispielhaften Ausführungsform des zweiten Aspekts der Erfindung umfasst das Verfahren gemäß dem zweiten Aspekt der Erfindung ferner das Ausgeben (z.B. Übertragen) einer Information, dass eine Sendung oder Lieferung in das Fach eingelegt und/oder das Fach geschlossen wurde, an ein Gerät einer Person. Gemäß einer beispielhaften Ausführungsform des dritten Aspekts der Erfindung umfasst das Verfahren gemäß dem dritten Aspekt der Erfindung ferner das Ausgeben (z.B. Übertragen) einer Information, dass eine Sendung oder Lieferung in das Fach eingelegt und/oder das Fach geschlossen wurde, um die Erzeugung von Zugangsberechtigungsinformation zu diesem Fach anzustoßen.

Die Erzeugung der Zugangsberechtigungsinformation in Reaktion auf die Information, dass eine Sendung oder Lieferung in das Fach eingelegt und/oder das Fach geschlossen wurde, wird beispielsweise nur vorgenommen oder ausgelöst, wenn alle von einer oder mehreren an die Zustellung der Sendung oder Lieferung an einen Empfänger geknüpften Voraussetzungen, erfüllt sind. Die Voraussetzungen können beispielsweise vor der Vornahme oder dem Auslösen der Erzeugung der Zugangsberechtigungsinformation geprüft werden. Eine der Voraussetzungen kann die erfolgte Zahlung für eine Nachnahme-Sendung sein.

Gemäß einer beispielhaften Ausführungsform des ersten Aspekts der Erfindung umfasst das Verfahren gemäß dem ersten Aspekt der Erfindung ferner die automatische Vornahme oder Auslösung, nach der Erzeugung der Zugangsberechtigungsinformation, entweder der Übertragung der Zugangsberechtigungsinformation an ein Gerät einer Person, oder der Übertragung einer Information, insbesondere einer Benachrichtigungsinformation, an ein Gerät einer Person.

Die Information kann beispielsweise Information über eine in die Fachanlage zugestellte Sendung und/oder über die erfolgte Erzeugung der Zugangsberechtigungsinformation und/oder deren Bereitstellung zur Abfrage sein. Die Person kann beispielsweise ein Empfänger sein, für den eine Sendung oder Lieferung in die Fachanlage zugestellt oder geliefert wurde, oder ein Zusteller, der eine Sendung, die von einem Versender in der Fachanlage deponiert wurde, abholen soll.

Wenn nur die Information (z.B. Benachrichtigungsinformation) an das Gerät der Person übertragen wird, kann die Übertragung der Zugangsberechtigungsinformation an das Gerät der Person in Reaktion auf von dem Gerät der Person stammende Anfrage nach Zugangsberechtigungsinformation vorgenommen oder ausgelöst werden.

Gemäß einer beispielhaften Ausführungsform des ersten Aspekts der Erfindung umfasst das Verfahren gemäß dem ersten Aspekt der Erfindung ferner das Nachhalten des aktuellen Belegungsstatus aller Fächer oder einer (insbesondere vordefinierten) Untermenge der Fächer der Fachanlage, durch eine gegenüber der Fachanlage externe Einheit, insbesondere durch ein an der Verwaltung einer Vielzahl von Fachanlagen, umfassend die Fachanlage, und/oder an der Erzeugung der Zugangsberechtigungsinformation zumindest beteiligtes Zentralsystem, wobei ein zuvor als unbelegt angesehenes Fach dann als belegt angesehen wird, wenn Zugangsberechtigungsinformation betreffend dieses Fach erzeugt wird, und ein zuvor als belegt angesehenes Fach dann wieder als unbelegt angesehen wird, wenn von einem Gerät einer Person eine Information erhalten wird, dass eine in dem Fach enthaltene Sendung oder Lieferung entnommen wurde.

Das Verfahren gemäß dem ersten Aspekt der Erfindung kann dann beispielsweise ferner umfassen: Auswählen, insbesondere durch die externe Einheit, des Fachs vor der Erzeugung der Zugangsberechtigungsinformation zumindest unter Berücksichtigung des nachgehaltenen Belegungsstatus aller Fächer oder einer (insbesondere vordefinierten) Untermenge der Fächer der Fachanlage, wobei die Zugangsberechtigungsinformation zumindest unter Verwendung von das ausgewählte Fach identifizierender Information erzeugt wird.

Das Auswählen des Fachs kann dann beispielsweise ferner unter Berücksichtigung eines Reservierungsstatus aller Fächer oder der Untermenge der Fächer der Fachanlage erfolgen.

Das Fach kann dabei beispielsweise als reserviert angesehen werden, wenn für dieses Fach angeforderte Zugangsberechtigungsinformation erzeugt oder deren Erzeugung angestoßen wurde, aber noch keine Bestätigung erhalten wurde, dass das Fach insbesondere nach Nutzung der angeforderten Zugangsberechtigungsinformation belegt worden ist.

Weitere Eigenschaften und Vorteile der Berücksichtigung des Fachbelegungs- und Reservierungszustands bei der Auswahl des Fachs wurden bereits oben erläutert.

Die oben beschriebenen Ausführungsbeispiele und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1:: eine schematische Darstellung einer beispielhaften Ausführungsform eines Systems, gemäß der vorliegenden Erfindung;
- Fig. 2:: ein Flussdiagramm einer beispielhaften Ausführungsform eines Verfahrens gemäß dem ersten Aspekt der vorliegenden Erfindung;
- Fig. 3:: ein Flussdiagramm einer beispielhaften Ausführungsform eines Verfahrens gemäß dem zweiten Aspekt der vorliegenden Erfindung;
- Fig. 4:: ein Flussdiagramm einer beispielhaften Ausführungsform eines Verfahrens gemäß dem dritten Aspekt der vorliegenden Erfindung;
- Fig. 5:: eine schematische Darstellung einer beispielhaften Ausführungsform einer Vorrichtung gemäß dem ersten Aspekt der Erfindung;
- Fig. 6:: eine schematische Darstellung einer beispielhaften Ausführungsform einer Vorrichtung gemäß dem zweiten Aspekt der Erfindung;
- Fig.7:: eine schematische Darstellung einer beispielhaften Ausführungsform einer Vorrichtung gemäß dem dritten Aspekt der Erfindung;
- Fig. 8:: ein Flussdiagramm einer beispielhaften Ausführung eines Verfahrens zur Registrierung eines Kunden einer Fachanlage am Zugangsberechtigungsserver gemäß einer beispielhaften Ausführungsform der Erfindung;
- Fig. 9a/b:: ein Flussdiagramm einer beispielhaften Ausführungsform eines Verfahrens zum Deponieren einer Sendung oder einer Lieferung in ein Fach eine Fachanlage gemäß einer beispielhaften Ausführungsform der Erfindung; und
- Fig. 10:: ein Flussdiagramm einer beispielhaften Ausführungsform eines Verfahrens zum Entnehmen einer gemäß dem Verfahren der Fig. 9a/9b in das Fach der Fachanlage deponierten Sendung oder Lieferung aus dem Fach.

### Detaillierte Beschreibung einiger beispielhafter Ausführungsformen der Erfindung

Ausführungsbeispiele der vorliegenden Erfindung betreffen Fachanlagen, beispielsweise Paketfachanlagen oder kombinierte Brief- und Paketfachanlagen, beispielsweise zum Einsatz in oder vor Mehrfamilienhäusern oder Bürogebäuden, alternativ aber auch an zentralen oder logistisch gut zu erreichenden Plätzten. Beispielsweise kann einem Nutzer der Fachanlage (beispielsweise ein Bewohner eines Mehrfamilienhauses), ein Fach zu Zwecken der Zustellung von Sendungen und/oder zum Abholenlassen von Sendungen (Retouren) insbesondere dynamisch für jede Sendung zugewiesen werden. Die Fachanlage kann zusätzlich oder alternativ dazu genutzt werden, Lieferungen von Lieferdiensten (z.B. Einkäufe, zubereitete Speisen (z.B. Pizza oder Sushi) zu erhalten. Auch andere Nutzungen der Fachanlage sind denkbar, beispielsweise zur Bereitstellung von durch Nutzer telefonisch oder online bestellten Einkäufen, wobei die Fachanlage dann beispielsweise in oder vor einem Supermarkt, bei dem die Einkäufe bestellt werden, aufgestellt wird.

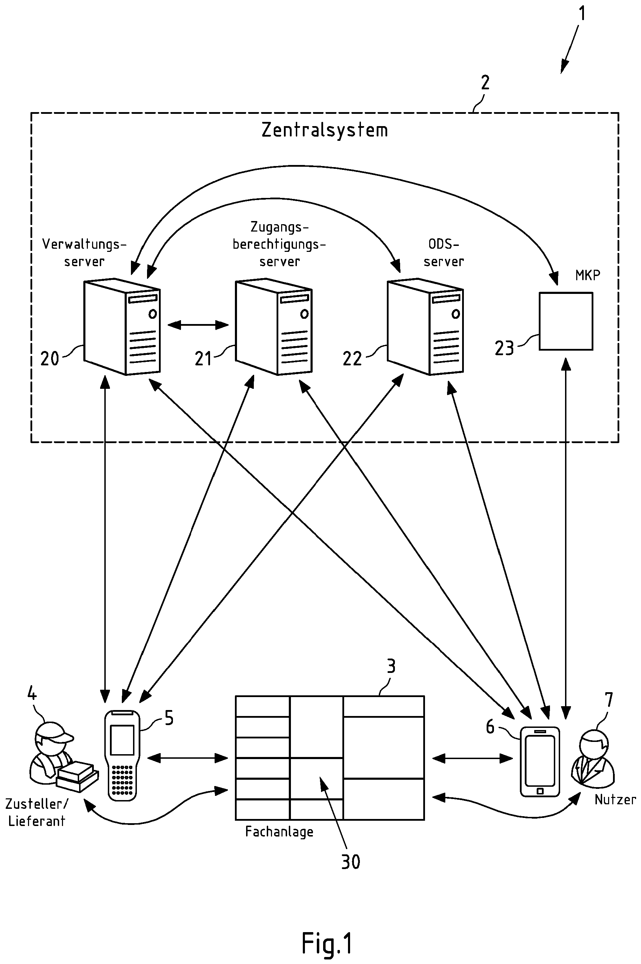

Fig. 1 zeigt schematisch ein System 1 gemäß einer beispielhaften Ausführungsform der vorliegenden Erfindung. Das System dient beispielsweise der Zustellung/Abholung von Sendungen, insbesondere Paketen oder Päckchen, kann wie oben erläutert aber auch von Lieferdiensten verwendet oder anderweitig verwendet werden, um bestellte Dinge an einen Nutzer zu übergeben, insbesondere auch bei dessen Abwesenheit. Das System 1 umfasst zunächst eine Fachanlage 3 mit einer Vielzahl von Fächern, von denen ein Fach mit dem Bezugszeichen 30 versehen wurde. In das Fach kann durch den Zusteller/Lieferanten 4 eine für den Nutzer 7 bestimmte Sendung/Lieferung deponiert werden. Ebenso kann der Nutzer 7 beispielsweise eine Sendung für den Zusteller 4 zur Abholung in einem Fach 30 der Fachanlage 3 deponieren. Der Zugang zu den Fächern 30 der Fachanlage 3 wird durch die Fachanlage anhand von der Fachanlage 3 bereitgestellter Zugangsberechtigungsinformation kontrolliert. Die Bereitstellung erfolgt durch das Gerät 5 (z.B. ein Handscanner) des Zustellers/Lieferanten 4 (z.B. mittels drahtloser Übertragung, beispielsweise optisch oder unter Verwendung von elektrischen, magnetischen oder elektromagnetischen Signalen der Feldern, insbesondere mittels Bluetooth- oder NFC-Übertragung) oder unter dessen Verwendung durch den Zusteller/Lieferanten 4 selbst (beispielsweise durch Eingabe der auf dem Gerät angezeigten Zugangsberechtigungsinformation durch den Zusteller/Lieferanten 4 in eine Benutzerschnittstelle (z.B. eine Tastatur oder einen berührungsempfindlichen Bildschirm) der Fachanlage 3, oder durch das Gerät 6 (z.B. ein Smartphone) des Nutzers 7 (wie zum Gerät 5 bereits ausgeführt) oder unter dessen Verwendung durch den Nutzer 7 selbst (wie zum Zusteller/Lieferant 4 bereits ausgeführt).

Unter anderem zum Erhalten der Zugangsberechtigungsinformation kommunizieren die Geräte 5 und 6 mit dem Zentralsystem 2, beispielsweise zumindest teilweise über eine auf zellularem Mobilfunk beruhenden Funkverbindung. Dies gewährleistet die Mobilität der Geräte 5 und 6 sowie die ausreichende Funkabdeckung in im Wesentlichen allen Regionen, wo die Fachanlage 3 eingesetzt wird. Beispielsweise basiert die Kommunikation auf dem Internet Protocol (IP), wobei das Zentralsystem über das Internet erreichbar ist und die Geräte 5 und 6 über eine drahtlose Funkverbindung auf das Internet zugreifen. Die Kommunikation zwischen den Geräten 5 und 6 mit dem Zentralsystem 2 kann teilweise oder vollständig verschlüsselt erfolgen. Auf den Geräten 5 und 6 kann jeweils eine Applikation (sog. App) installiert sein, die sowohl die Kommunikation mit der Fachanlage, dem Zusteller/Lieferanten 4 (im Falle des Geräts 5) bzw. dem Nutzer 7 (i m Falle des Geräts 6) sowie mit dem Zentralsystem steuert. Dadurch kann der Nutzer 7 beispielsweise ein handelsübliches Smartphone als Gerät 6 einsetzen, auf dem dann lediglich eine derartige App installiert und - beispielsweise durch Registrierung im Zentralsystem 2 - in Betrieb genommen werden muss.

Das Zentralsystem umfasst einen Verwaltungsserver 20, einen Zugangsberechtigungsserver 21, einen Operational Data Store (ODS)-Server 22 und eine Multikanalplattform (MKP) 23. Der Verwaltungsserver 20 dient unter anderem dem Nachhalten des Fachbelegungs- und Fachreservierungszustands der Fachanlage 3. Der Zugangsberechtigungsserver 21 dient der Erzeugung und Ausgabe (beispielsweise auf Anfrage) von Zugangsberechtigungsinformation. Der ODS-Server 22 verwaltet beispielsweise Sendungs-/Lieferungsinformation und/oder Informationen zum Nutzer 7 oder bildet eine Schnittstelle zu einem System, das derartige Informationen bereitstellt. Die MKP 23 dient beispielsweise dazu, dem Nutzer 7 Benachrichtigungen zukommen zu lassen, beispielsweise per SMS (Short Message Service) oder E-Mail. Die unterschiedlichen Einheiten 20-23 des Zentralsystems 2 können auch teilweise oder sämtlich in einer Vorrichtung, z.B. einem Server, zusammengefasst sein. Es versteht sich, dass, wenn vorliegend von einem Server die Rede ist, darunter auch eine Gruppe von Servern zu verstehen ist, auf die die jeweils zu bewältigenden Aufgaben des Servers beispielsweise zur schnelleren oder parallelen Verarbeitung verteilt sind. Das Zentralsystem 2 kann neben der Fachanlage 3 auch einer Vielzahl weiterer funktional der Fachanlage 3 entsprechenden Fachanlagen zugeordnet sein, also insbesondere deren Fachbelegungs- und Reservierungszustand nachhalten und Zugangsberechtigungsinformation für diese erzeugen und ausgeben.

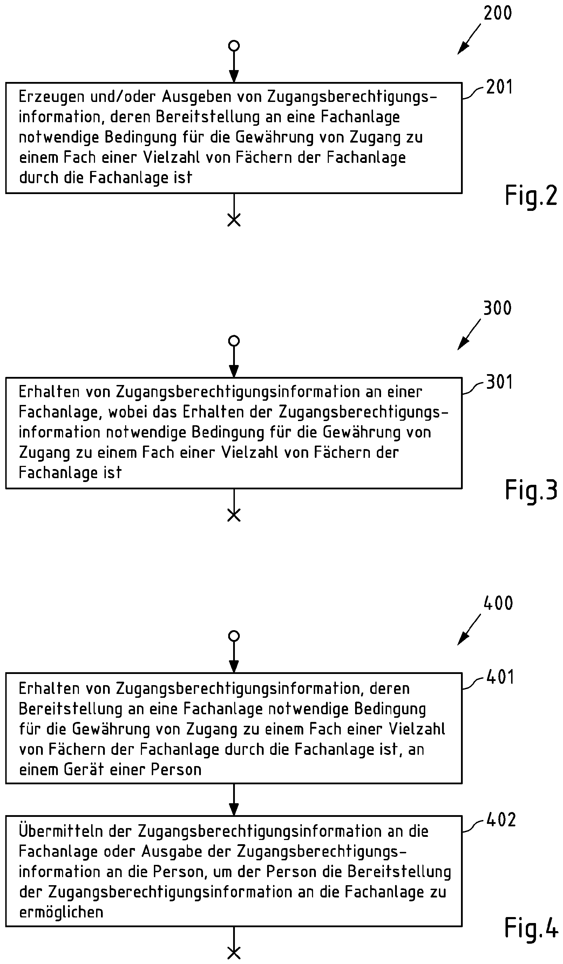

Fig. 2 ist ein Flussdiagramm 200 einer beispielhaften Ausführungsform eines Verfahrens gemäß dem ersten Aspekt der vorliegenden Erfindung. Das Verfahren des Flussdiagramms 200 wird beispielsweise von einer oder mehreren Einheiten des Zentralsystems 2 (siehe Fig. 1) ausgeführt und/oder gesteuert, insbesondere von dem Zugangsberechtigungsserver 21 und/oder dem Verwaltungsserver 20.

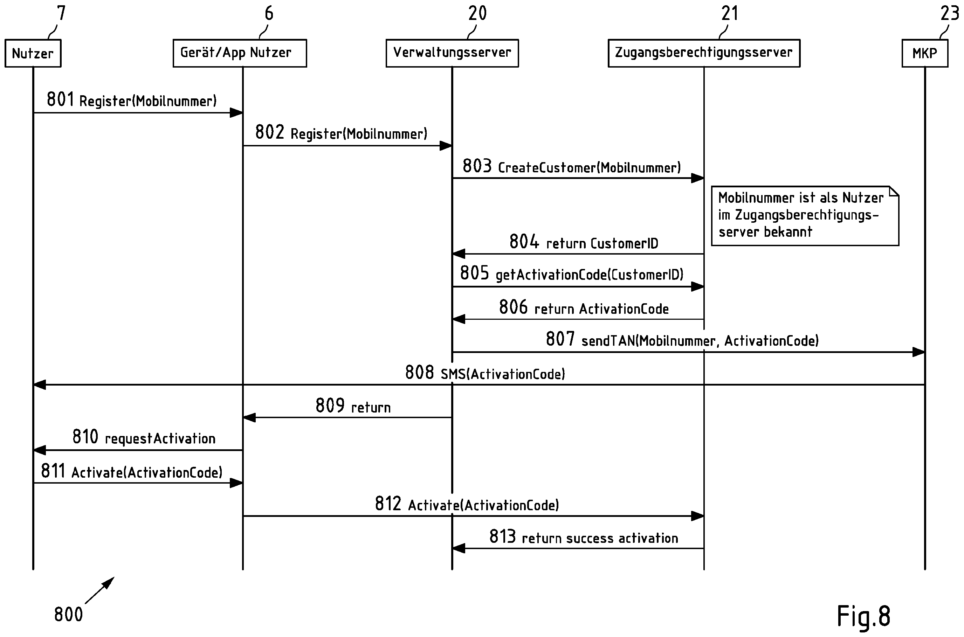

In einem Schritt 201 des Flussdiagramms 200 wird Zugangsberechtigungsinformation erzeugt und/oder ausgegeben, deren Bereitstellung an eine Fachanlage notwendige Bedingung für die Gewährung von Zugang zu einem Fach einer Vielzahl von Fächern der Fachanlage durch die Fachanlage ist. Weitere Details und/oder Schritte des ersten Aspekts der Erfindung wurden bereits oben ausführlich erläutert. Das Flussdiagramm 200 kann durch einige oder mehrere weitere Schritte, die sich aus den Flussdiagrammen der Fig. 8-10 ergeben, ergänzt sein.

Fig. 3 ist ein Flussdiagramm 300 einer beispielhaften Ausführungsform eines Verfahrens gemäß dem zweiten Aspekt der vorliegenden Erfindung. Das Verfahren des Flussdiagramms 300 wird beispielsweise von der Fachanlage 3 (siehe Fig. 1, insbesondere von einer Steuereinheit der Fachanlage 3) ausgeführt und/oder gesteuert.

In einem Schritt 301 des Flussdiagramms 300 wird Zugangsberechtigungsinformation an einer Fachanlage erhalten (z.B. drahtlos oder über eine Benutzerschnittstelle empfangen), wobei das Erhalten der Zugangsberechtigungsinformation notwendige Bedingung für die Gewährung von Zugang zu einem Fach einer Vielzahl von Fächern der Fachanlage ist. Weitere Details und/oder Schritte des zweiten Aspekts der Erfindung wurden bereits oben ausführlich erläutert. Das Flussdiagramm 300 kann durch einige oder mehrere weitere Schritte, die sich aus den Flussdiagrammen der Fig. 8-10 ergeben, ergänzt sein.

Fig. 4 ist ein Flussdiagramm 400 einer beispielhaften Ausführungsform eines Verfahrens gemäß dem dritten Aspekt der vorliegenden Erfindung. Das Verfahren des Flussdiagramms 400 wird beispielsweise von dem Gerät 5 oder dem Gerät 6 (siehe Fig. 1) ausgeführt und/oder gesteuert.

In einem Schritt 401 des Flussdiagramms 400 wird an einem Gerät einer Person (z.B. Zusteller/Lieferant 4 oder Person 7) Zugangsberechtigungsinformation erhalten (z.B. durch drahtlose Übertragung), deren Bereitstellung an eine Fachanlage notwendige Bedingung für die Gewährung von Zugang zu einem Fach einer Vielzahl von Fächern der Fachanlage durch die Fachanlage ist. In einem Schritt 402 wird die Zugangsberechtigungsinformation an die Fachanlage übermittelt (beispielsweise durch drahtlose Kommunikation) oder an die Person ausgegeben, um der Person die Bereitstellung der Zugangsberechtigungsinformation an die Fachanlage zu ermöglichen. Weitere Details und/oder Schritte des dritten Aspekts der Erfindung wurden bereits oben ausführlich erläutert. Das Flussdiagramm 400 kann durch einige oder mehrere weitere Schritte, die sich aus den Flussdiagrammen der Fig. 8-10 ergeben, ergänzt sein.

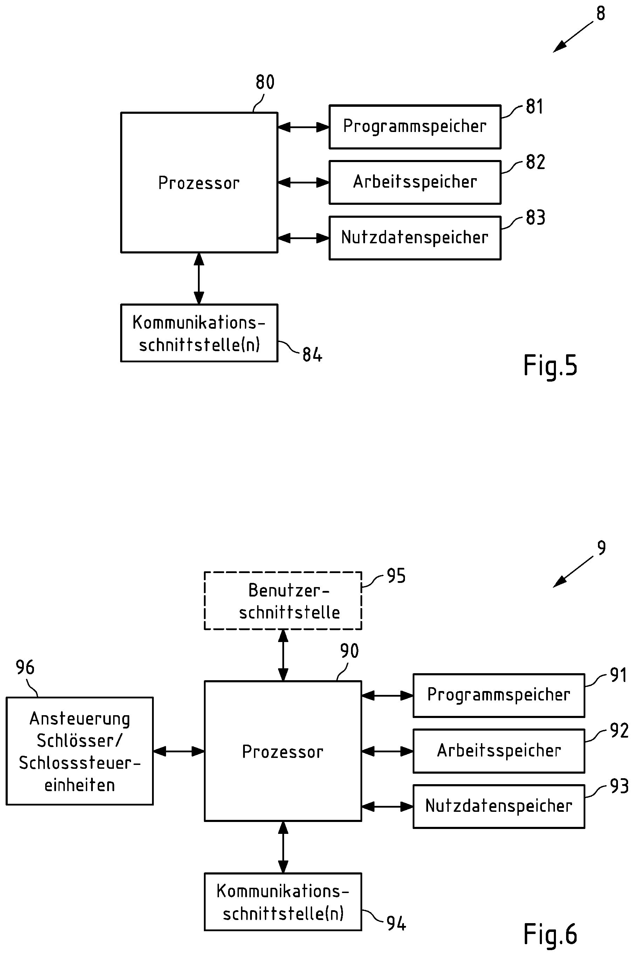

Fig. 5 ist eine schematische Darstellung einer beispielhaften Ausführungsform einer Vorrichtung 8 gemäß dem ersten Aspekt der Erfindung. Die Vorrichtung 8 kann beispielsweise jeweils die Einheiten des Zentralsystems 2 repräsentieren, insbesondere den Zugangsberechtigungsserver 21 und den Verwaltungsserver 20.

Die Vorrichtung 8 umfasst einen Prozessor 80, einen Programmspeicher 81, einen Arbeitsspeicher 82, einen Nutzdatenspeicher 83 sowie eine oder mehrere Kommunikationsschnittelle(n) 84. Der Prozessor führt beispielsweise ein Programm gemäß dem ersten Aspekt der Erfindung aus, das in dem Programmspeicher 81 gespeichert ist, beispielsweise als Firmware. Arbeitsspeicher 82 dient insbesondere der Speicherung temporärer Daten während des Ablaufs dieses Programms.

Der Nutzdatenspeicher 83 dient der Speicherung von Daten, die bei der Abarbeitung des Programms erforderlich sind. Vorliegend kann es sich dabei beispielsweise um jeweilige Schlüssel von einer oder mehreren Fachanlagen 3 handeln, die zur Erzeugung von Zugangsberechtigungsinformation für Fächer dieser Fachanlagen 3 jeweils erforderlich sind. Dann ist in jeder der Fachanlagen 3 auch ein entsprechend korrespondierender z.B. symmetrischer oder asymmetrischer Schlüssel gespeichert. Ein Beispiel für einen symmetrischen Schlüssel ist ein AES (Advanced Encryption Standard) Schlüssel. Der Nutzdatenspeicher enthält also beispielsweise N unterschiedliche Schlüssel für N Fachanlagen, und jede der N Fachanlage enthält einen korrespondierenden dieser Schlüssel, so dass keine der N Fachanlagen den gleichen Schlüssel speichert. Der in der Fachanlage 3 gespeicherte Schlüssel dient insbesondere der Prüfung der Integrität und Authentizität von erhaltener Zugangsberechtigungsinformation. Die Zugangsberechtigungsinformation beinhaltet beispielsweise eine Kennung des Fachs der Fachanlage als Zugangsberechtigungsparameter und ggf. weitere Zugangsberechtigungsparameter, die beispielsweise die Fachanlage und/oder ein(e) zur Übermittlung der Zugangsberechtigungsinformation eingesetztes Gerät oder App kennzeichnen und/oder einen Gültigkeitszeitraum der Zugangsberechtigungsinformation definieren. Zur Erzeugung der Zugangsberechtigungsinformation zu einem Fach einer Fachanlage werden von dem Prozessor 80 beispielsweise unter Verwendung des zu dem Schlüssel der Fachanlage korrespondierenden, im Nutzdatenspeicher 83 gespeicherten Schlüssels, kryptographische Operationen über die Zugangsberechtigungsparameter ausgeführt, um eine Prüfinformation zu erhalten. Diese wird dann zusammen mit den Zugangsberechtigungsparametern als Zugangsberechtigungsinformation den Geräten 5 oder 6 bereitgestellt. Wenn zum Nachweis der Zugangsberechtigung zu einem Fach der Fachanlage 3 nun diese Zugangsberechtigungsinformation an die Fachanlage 3 übertragen oder dort eingeben wird, kann mithilfe der empfangenen Zugangsberechtigungsinformation und dem in der Fachanlage gespeicherten Schlüssel geprüft werden, ob die Zugangsberechtigungsinformation integer und authentisch ist. Beispielsweise wird die Prüfinformation basierend auf den empfangenen Zugangsberechtigungsparametern und dem Schlüssel gemäß den gleichen kryptographischen Operationen, wie sie vom Prozessor 80 ausgeführt wurden, erneut berechnet und mit der empfangenen Prüfinformation verglichen. Bei Übereinstimmung wird dann beispielsweise davon ausgegangen, dass die empfangene Zugangsberechtigungsinformation integer und authentisch ist. Die kryptographischen Operationen können beispielsweise die Bildung eines Message Authentication Codes (MACs) für die Zugangsberechtigungsparameter basierend auf einem Schlüssel umfassen. Beispiele für MACs sind der Message Authentication Algorithm (MAA), der Keyed-Hash Message Authentication Code (HMAC) oder der von der NIST spezifizierte Cipher-Based Message Authentication Code (CMAC). Im Falle von asymmetrischen Schlüsselpaaren kann die kryptographische Information beispielsweise auf einer elektronischen Signatur (also z.B. einem verschlüsselten Hashwert über die Zugangsberechtigungsparameter) bestehen.

Die Kommunikationsschnittstelle(n) 84 kann/können zumindest eine Schnittstelle zur Kommunikation mit anderen Einheiten des Zentralsystems 2 und/oder mit den Geräten 5 und 6 umfassen. Diese Kommunikation kann beispielsweise auf dem Internet Protocol (IP) basieren. Beispielsweise ist dazu zumindest eine der Kommunikationsschnittstelle(n) 84 als Local Area Network (LAN) Schnittstelle ausgeführt.

Fig. 6 ist eine schematische Darstellung einer beispielhaften Ausführungsform einer Vorrichtung 9 gemäß dem zweiten Aspekt der Erfindung. Die Vorrichtung 9 kann beispielsweise eine Fachanlage 3 (siehe Fig. 1) oder deren Steuereinheit repräsentieren.

Die Vorrichtung 9 umfasst einen Prozessor 90, einen Programmspeicher 91, einen Arbeitsspeicher 92, einen Nutzdatenspeicher 93, eine oder mehrere Kommunikationsschnittelle(n) 94, eine optionale Benutzerschnittstelle 95 und eine Ansteuerungseinheit 96 für die Schlösser oder Schlosssteuereinheiten der Fächer der Fachanlage. Der Prozessor 90 führt beispielsweise ein Programm gemäß dem zweiten Aspekt der Erfindung aus, das in dem Programmspeicher 91 gespeichert ist, beispielsweise als Firmware. Arbeitsspeicher 92 dient insbesondere der Speicherung temporärer Daten während des Ablaufs dieses Programms.

Der Nutzdatenspeicher 93 dient der Speicherung von Daten, die bei der Abarbeitung des Programms erforderlich sind. Vorliegend kann es sich dabei beispielsweise um den bereits oben erläuterten, der Fachanlage zugeordneten Schlüssel (z.B. einen AES-Schlüssel) handeln. Dieser Schlüssel ist der Vorrichtung 9 beispielsweise bereits bei der Produktion, bei Auslieferung oder bei Inbetriebnahme zugeordnet worden. Alternativ kann der Schlüssel auch im Programmspeicher 91 zusammen mit dem Programm oder als Teil davon gespeichert sein. In beispielhaften Ausführungsformen der vorliegenden Erfindung ist die Vorrichtung 9 hinsichtlich der Ermittlung des ggf. zu öffnenden Fachs unter Verwendung der Zugangsberechtigungsinformation zustandslos. Die Ermittlung des Fachs, zu dem Zugang gewährt werden soll, ist damit insbesondere unabhängig von in der Vorrichtung 9 (insbesondere nach Inbetriebnahme und/oder sich im Betrieb ändernder) gespeicherter Information (z.B. einer Zuordnungstabelle), mit Ausnahme von Information, wie etwa dem Schlüssel. Die Ermittlung des Fachs ist insbesondere unabhängig von Information, die von einer aktuellen Fachbelegung der Fachanlage abhängt oder diese widerspiegelt.

Die Kommunikationsschnittstelle(n) 94 umfasst/umfassen beispielsweise eine Schnittstelle zur drahtlosen Kommunikation mit den Geräten 5 und 6, beispielsweise mittels optischer Übertragung und/oder mittels Kommunikation, die auf elektrischen, magnetischen oder elektromagnetischen Signalen oder Feldern beruht, insbesondere auf Bluetooth, NFC und/oder RFID (Radio Frequency Identification). Dabei können zur Kommunikation mit dem Gerät 5 das gleiche oder ein anderes Übertragungsverfahren eingesetzt werden wie zur Kommunikation mit dem Gerät 6. Die Vorrichtung 9 (und mithin die Fachanlage 3) ist beispielsweise nicht zur direkten Kommunikation mit dem Zentralsystem 2 eingerichtet, verfügt also beispielsweise nicht über eine Kommunikationsschnittstelle, die einen Zugang zum Internet oder zu einem anderen Netz, an das das Zentralsystem 2 angeschlossen ist, ermöglicht.

Die Benutzerschnittstelle 95 ist optional und zur Kommunikation mit dem Zusteller/Lieferanten 4 und/oder dem Nutzer 7 eingerichtet. Dies kann beispielsweise eine Ausgabeeinheit zum Anzeigen (z.B. über einen Bildschirm oder über fachspezifische Leuchtanzeigen (z.B. zur Darstellung eines jeweiligen Zustands belegt/unbelegt) oder akustischen Ausgeben von Informationen und/oder eine Einheit zum Erhalten von (Zugangsberechtigungs-)Informationen (z.B. eine Tastatur oder einen berührungsempfindlichen Bildschirm mit Bildschirmtastatur oder ein Spracherkennungsmodul) von den Personen 4 und/oder 5 umfassen.

Die Ansteuerungseinheit 96 ermöglicht es, ein einzelnes Fach der Fachanlage gezielt zu öffnen oder zu entriegeln, um die Öffnung zu ermöglichen, insbesondere durch Ansteuerung des Schlosses des Fachs oder eine Schlosssteuereinheit des Fachs. Zusätzlich oder alternativ kann die Verriegelung eines Fachs bewirkt werden. Die Ansteuerungseinheit 96 ist beispielsweise über eine jeweilige Verdrahtung mit allen Schlössern oder Schlosssteuereinheiten der Fachanlage verbunden oder an einen Bus angeschlossen, an dem auch alle Schlösser oder Schlosssteuereinheiten der Fachanlage angebunden sind.

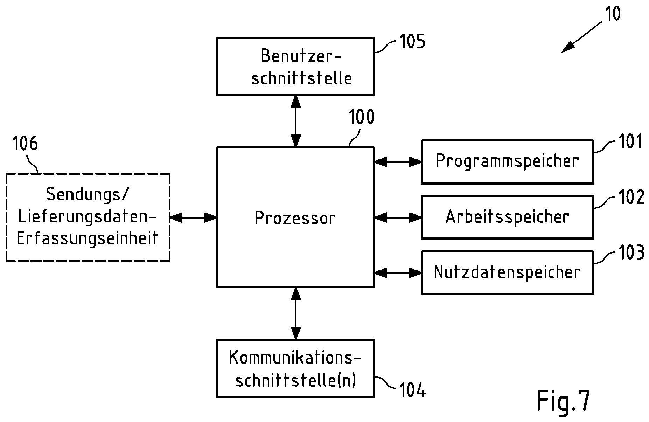

Fig. 7 ist eine schematische Darstellung einer beispielhaften Ausführungsform einer Vorrichtung 10 gemäß dem dritten Aspekt der Erfindung. Die Vorrichtung 10 kann beispielsweise das Gerät 5 und 6 repräsentieren. Die Vorrichtung 10 kann im Falle des Geräts 5 beispielsweise ein portables Scangerät eines Zustellers/Lieferanten 4 darstellen (einen sog. Handscanner), also ein Gerät, das zur optischen Erfassung von Sendungs- oder Lieferungsdaten, insbesondere in Form von 2D- oder 3D-Barcodes, von der Sendung oder Lieferung eingerichtet ist. Wenn die Vorrichtung 10 das Gerät 6 des Nutzers 7 repräsentiert, kann es sich dabei insbesondere um ein Smartphone handeln, also insbesondere um ein Mobiltelefon mit der Fähigkeit, auch komplexere Programme, sog. Apps, selbstständig auszuführen.

Die Vorrichtung 10 umfasst einen Prozessor 100, einen Programmspeicher 101, einen Arbeitsspeicher 102, einen Nutzdatenspeicher 103, eine oder mehrere Kommunikationsschnittelle(n) 104, eine Benutzerschnittstelle 105 und eine optionale Einheit 106 zur Erfassung von Sendungs- oder Lieferungsdaten.

Der Prozessor 100 führt beispielsweise ein Programm gemäß dem dritten Aspekt der Erfindung aus, das in dem Programmspeicher 101 gespeichert ist, beispielsweise als App oder als Firmware. Arbeitsspeicher 102 dient insbesondere der Speicherung temporärer Daten während des Ablaufs dieses Programms.

Der Nutzdatenspeicher 103 dient der Speicherung von Daten, die bei der Abarbeitung des Programms erforderlich sind.

Die Kommunikationsschnittstelle(n) 104 umfassen eine oder mehrere Schnittstellen zur Kommunikation der Vorrichtung mit dem Zentralsystem. Die Schnittstelle kann beispielsweise auf IP beruhen, aber sich aufgrund der Portabilität der Vorrichtung 10 einer drahtlosen Übertragungstechnik als physikalischer Schicht bedienen, die beispielsweise auf zellularem Mobilfunk (z.B. GSM, E-GSM, UMTS, LTE, 5G) oder eine WLAN (Wireless Local Area Network) beruht. Die Kommunikationsschnittstelle(n) 104 umfassen optional ferner eine Schnittstelle zur Kommunikation mit der Fachanlage 3, beispielsweise basierend auf optischer Übertragung, Bluetooth oder NFC. Hier kann eine Übertragungstechnik mit verhältnismäßig geringer Reichweite, beispielsweise weniger als 100m oder 10m oder 5m ausreichend und ggf. sogar erwünscht sein, um ein Abhören der Übertragung durch Dritte zu erschweren.

Die Benutzerschnittstelle 105 kann als Bildschirm und Tastatur oder als berührungsempfindliche Anzeige (Touchscreen) ausgestaltet sein, ggf. mit zusätzlichen akustischen und/oder haptischen Signalgebungseinheiten. Die Anzeige von Zugangsberechtigungsinformation über die Benutzerschnittstelle kann eine gesonderte Schnittstelle der Schnittstellen 104 zur Kommunikation mit der Fachanlage 3 unnötig machen, wenn diese Zugangsberechtigungsinformation in eine Benutzerschnittstelle der Fachanlage 3 eingegeben werden kann (siehe Benutzerschnittstelle 95 der Fig. 6). Die Erfassungseinheit 106 zur Erfassung von Sendungs- oder Lieferungsdaten (beispielsweise in Form einer optischen Scaneinheit) ist beispielsweise lediglich bei dem Gerät 5, aber nicht bei dem Gerät 6 vorhanden.

In den Ausführungsbeispielen der Fig. 5-7 kann der Prozessor beispielsweise jeweils eine Kontrolleinheit, ein Mikroprozessor, eine Mikrokontrolleinheit wie ein Mikrocontroller, ein digitaler Signalprozessor (DSP), eine Anwendungsspezifische Integrierte Schaltung (ASICs) oder ein Field Programmable Gate Array (FPGAs) sein. Der Programmspeicher und/oder der Nutzdatenspeicher kann in den Ausführungsbeispielen der Fig. 5-7 beispielsweise ein persistenter Speicher, wie beispielsweise ein Read-Only-Memory (ROM)-Speicher sein. Der Programmspeicher kann beispielsweise fest mit dem jeweiligen Prozessor verbunden sein, kann aber alternativ auch lösbar mit dem jeweiligen Prozessor verbunden sein, beispielsweise als Speicherkarte, Diskette oder optisches Datenträgermedium (z.B. eine CD oder DVD). Der Arbeitsspeicher der Ausführungsbeispiele der Fig. 5-7 wird beispielsweise zur Speicherung temporärer Ergebnisse während der Abarbeitung der Programmanweisungen genutzt, es handelt sich hierbei beispielsweise um einen flüchtigen Speicher, wie beispielsweise einen Random-Access-Memory (RAM)-Speicher.

Fig. 8 zeigt ein Flussdiagramm 800 einer beispielhaften Ausführung eines Verfahrens zur Registrierung eines Kunden einer Fachanlage am Zugangsberechtigungsserver gemäß einer beispielhaften Ausführungsform der Erfindung. Das Verfahren wird beispielsweise durchgeführt, nachdem der Nutzer 7, der die Fachanlage 3 nutzen möchte, eine entsprechende App (insbesondere des Betreibers der Fachanlage 3, beispielsweise eines Zustellungsunternehmens) auf seinem Gerät 6 installiert hat. Die Registrierung dient insbesondere dazu, die MobiltelefonNummer (die beispielhaft und stellvertretend für eine andere Kennung des Geräts 6 sein kann, beispielsweise die IMEI (International Mobile Equipment Identity)) am Zugangsberechtigungsserver 21 bekannt zu machen und zumindest sicherzustellen, dass die Mobilfunknummer, die gegenüber dem Zugangsberechtigungsserver 21 angegeben wird, unter der Kontrolle desjenigen ist, der die Registrierung dieser Mobiltelefonnummer beim Zugangsberechtigungsserver 21 angestoßen hat.

Im Schritt 801 stößt der Nutzer 7 den Prozess an, indem er die Mobiltelefonnummer des Geräts 6 in die App eingibt oder der App ermöglicht, auf diese Mobiltelefonnummer zuzugreifen. Es sei angemerkt, dass grundsätzlich auch die Mobiltelefonnummer eines von dem Gerät 6 verschiedenen anderen Geräts angegeben werden kann, sofern der Nutzer 7 dieses andere Gerät kontrolliert (also zumindest darauf SMS-Nachrichten empfangen kann).

Im Schritt 802 sendet die App eine Nachricht mit der Mobiltelefonnummer an den Verwaltungsserver, der daraufhin im Schritt 803 den Zugangsberechtigungsserver 21 veranlasst, einen neuen Kunden anzulegen und mit der Mobiltelefonnummer zu assoziieren. Der Zugangsberechtigungsserver 21 retourniert im Schritt 804 eine erzeugte Kennung für den neuen Kunden (CustomerlD) an den Verwaltungsserver 20, der im Schritt 805 dann einen Aktivierungscode beim Zugangsberechtigungsserver 21 anfragt und diesen im Schritt 806 erhält. Der Verwaltungsserver nutzt dann im Schritt 807 die MKP 23, um den Aktivierungscode an die Mobiltelefonnummer senden zu lassen. Hier sind zusätzlich oder alternativ auch andere Kommunikationspfade denkbar, beispielsweise E-Mail- oder Whatsapp-Nachrichten, wobei dann zusätzlich oder alternativ zu der Mobiltelefonnummer im Zugangsberechtigungsserver 21 eine E-Mail-Adresse des Nutzers 7 gespeichert wird.

Die MKP 23 sendet den Aktivierungscode dann im Schritt 808 an die angegebene Mobiltelefonnummer. Im Schritt 809 stößt der Verwaltungsserver 20 mit einer Nachricht an die App einen Prozess 810 an, in dem die App vom Nutzer den Aktivierungscode abfragt.

Im Schritt 811 gibt der Nutzer 7 den an das Gerät 6 (oder wie oben erläutert ein anderes Gerät) gesendeten Aktivierungscode in die App ein, die diesen dann im Schritt 812 an den Zugangsberechtigungsserver 21 weiterleitet. Dieser kann dann den im Schritt 806 ausgegebenen Aktivierungscode mit dem im Schritt 812 empfangenen Aktivierungscode vergleichen und bei Übereinstimmung die Schlussfolgerung ziehen, dass die bei der Registrierung angegebene Mobiltelefonnummer von derjenigen Person kontrolliert wird, die die Registrierung vorgenommen hat. Vorteilhaft akzeptiert der Zugangsberechtigungsserver 21 den im Schritt 812 erhaltenen Aktivierungscode nur innerhalb eines begrenzten Zeitintervalls, beispielsweise innerhalb weniger Minuten (z.B. 5 Minuten) nach der Ausgabe im Schritt 806, um Missbrauchsmöglichkeiten zu reduzieren. Der Zugangsberechtigungsserver 21 kann dann im Schritt 813 noch den Verwaltungsserver 20 informieren, dass der gemäß Schritt 803 anzulegende Kunde erfolgreich aktiviert wurde. Als Teil des Aktivierungscodes oder zusätzlich dazu kann vom Zugangsberechtigungsserver 21 auch ein Schlüssel oder Information zur Erzeugung eines Schlüssels im Schritt 806 ausgegeben und dann wie beschrieben in den Schritten 807, 808 an den Nutzer 7 und schließlich im Schritt 811 an die App übermittelt werden. Der Schlüssel kann dann beispielsweise in der App gespeichert werden oder die Information zur Erzeugung eines Schlüssels in der App verwendet werden. Der übermittelte oder erzeugte Schlüssel kann dann zu einem Schlüssel im Zugangsberechtigungsserver 21 korrespondieren (beispielsweise als symmetrisches oder asymmetrisches Schlüsselpaar), so dass die zukünftige Kommunikation zwischen dem Zugangsberechtigungsserver 21 und der App verschlüsselt basierend auf diesem Schlüssel und dem korrespondierenden Schlüssel erfolgen kann. Dabei kann der an die App übertragene oder dort erzeugte Schlüssel insbesondere für jede vom Zugangsberechtigungsserver verwaltete App unterschiedlich gewählt sind, er kann dann beispielsweise der jeweiligen Mobiltelefonnummer im Zugangsberechtigungsserver 21 zugeordnet sein.

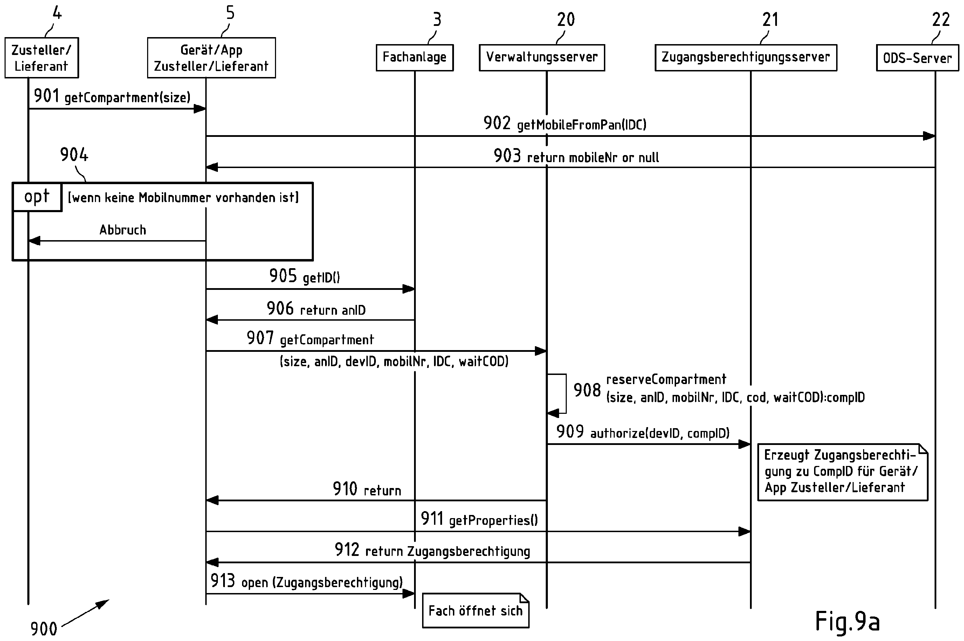

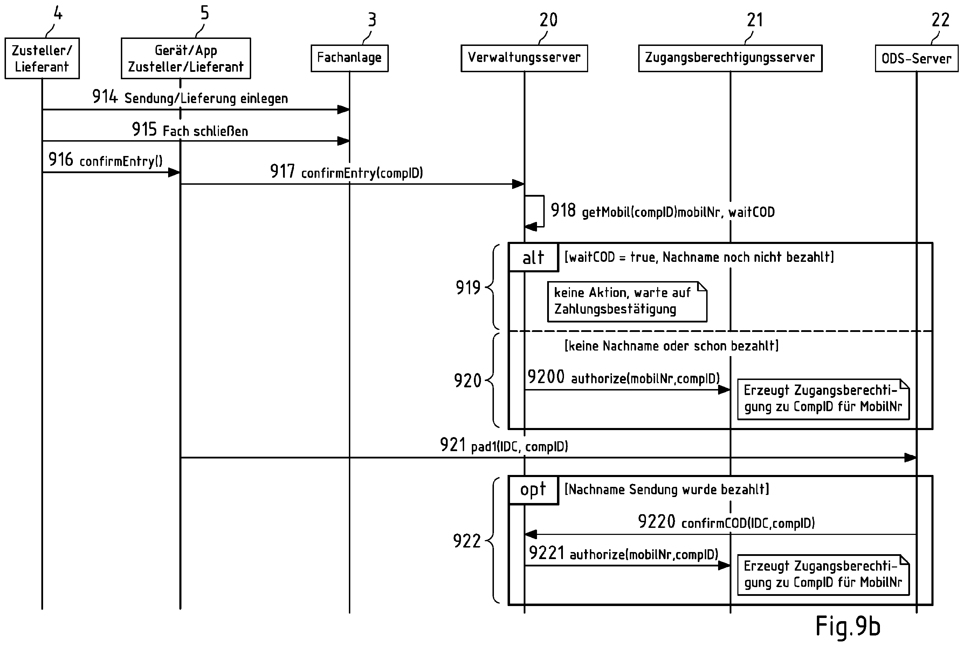

Die gemäß Fig. 8 beschriebene Registrierungsprozedur kann beispielsweise auch für das Gerät 5 eines Zustellers 4 durchgeführt werden, um die Kommunikation zwischen dem Zugangsberechtigungsserver 21 und einer App auf dem Gerät 5 des Zustellers 4 zu ermöglichen. Anstelle der Mobiltelefonnummer kann dabei beispielsweise eine Kennung des Geräts 5 (z.B. die devID der Fig. 9a/9b) im Zugangsberechtigungsserver 21 registriert werden. Dabei kann die Ausgabe und Überprüfung des Aktivierungscodes beispielsweise entfallen, insbesondere wenn anderweitig sichergestellt werden kann, dass die jeweilige Gerätekennung (z.B. die devID) tatsächlich dem jeweils richtigen Gerät 5 zugeordnet ist. Wenn nachfolgend von der Kennung des Geräts 5 gesprochen wird, soll darunter entweder die Kennung des Geräts 5 oder die Kennung der App auf dem Gerät 5 verstanden werden.

Fig. 9a/b ist ein Flussdiagramm 900 einer beispielhaften Ausführungsform eines Verfahrens zum Deponieren einer Sendung oder einer Lieferung in ein Fach eine Fachanlage gemäß einer beispielhaften Ausführungsform der Erfindung. An den Schritt 913 der Fig. 9a schließt sich dabei der Schritt 914 der Fig. 9b an. Beschrieben wird, wie ein Zusteller/Lieferant 4, der Zugang zu einem Fach 30 einer Fachanlage 3 benötigt, diesen Zugang erhält und nach dem Einstellen der Sendung/Lieferung in das Fach 30 eine Zugangsberechtigung für den Empfänger 7 der Sendung/Lieferung erzeugt und der Empfänger 7 über die Abholbereitschaft der Sendung/Lieferung informiert wird.

Im Schritt 901 teilt der Zusteller/Lieferant 4 einem Programm auf dem Gerät 5, welches Programm nachfolgend als App bezeichnet wird, mit, dass er Zugang zu einem (beliebigen) Fach der Fachanlage benötigt. Diese Anfrage kann einen oder mehreren Parametern enthalten, die bei der Auswahl des Fachs berücksichtigt werden können. Im vorliegenden Ausführungsbeispiel ist dies die Fachgröße, die beispielsweise vom Zusteller/Lieferant 4 aus der Größe der Sendung/Lieferung abgeleitet wird. In den Schritten 902 und 903 wird durch Kommunikation zwischen der App und dem ODS-Server 22 festgestellt, ob der ODS-Server 22 für die Sendung/Lieferung einen Datensatz mit einer Mobiltelefonnummer des Empfängers (Nutzer 7) der Sendung/Lieferung gespeichert hat. Die Identifizierung des Datensatzes kann beispielsweise auf einer Kennung der Sendung/Lieferung (IDentCode, IDC, der beispielsweise zum Tracking von Sendungen verwendet wird) beruhen, die beispielsweise von der App im Schritt 902 an den ODS-Server 22 übermittelt wird und beispielsweise zuvor mit einer Erfassungseinheit (z.B. einem Barcode-Scanner) des Geräts 5 von der Sendung/Lieferung erfasst wurde.

Im (optionalen) Schritt 904 wird geprüft, ob eine Mobiltelefonnummer des Empfängers (Nutzer 7) ermittelt werden konnte. Wenn dies nicht der Fall ist, bricht das Verfahren 900 ab. Anderenfalls fragt die App im Schritt 905 eine Kennung (hier beispielhaft als "anID" bezeichnet) der Fachanlage 3 ab und erhält diese im Schritt 906. Diese Abfrage der Kennung der Fachanlage 3 kann beispielsweise auf Bluetooth- oder NFC-Kommunikation beruhen, alternativ aber auch auf optischer Erfassung mittels einer Erfassungseinheit des Geräts 5, wobei der Schritt 905 dann entfällt und der Schritt 906 das Erfassen repräsentiert.

Die App richtet sich dann im Schritt 907 mit einer Anfrage an den Verwaltungsserver 20, in der u.a. die Kennung der Fachanlage (anID), die gewünschte Fachgröße (size), die Kennung des Geräts 5 oder der App auf dem Gerät 5 (devlD), die Mobiltelefonnummer des Empfängers (mobilNr), die Kennung der Sendung/Lieferung (IDC) und eine Information, ob es sich um eine noch unbezahlte Nachnahmesendung handelt oder nicht (waitCOD) enthalten ist. Dies führt im Schritt 908 zur Reservierung eines Fachs. Die Reservierung beinhaltet hier beispielhaft auch die Auswahl des Fachs (identifiziert anhand einer Kennung, die hier beispielhaft als "CompID" bezeichnet wird), insbesondere unter Berücksichtigung der Fachgröße (size). Der Verwaltungsserver 20 hält beispielsweise den aktuellen Fachbelegungs- und Fachreservierungszustand der Fachanlage 3 kontinuierlich nach, so dass anhand des Fachbelegungs- und Fachreservierungszustands und optional weiterer Parameter wie z.B. der gewünschten Fachgröße ein noch freies Fach ausgewählt werden kann.

Wenn ein freies Fach ausgewählt wurde, autorisiert der Verwaltungsserver 20 im Schritt 909 die Erzeugung einer Zugangsberechtigung (hier auch als Zugangsberechtigungsinformation bezeichnet) durch den Zugangsberechtigungsserver 21. Dazu wird diesem zumindest die Kennung des ausgewählten Fachs (CompID) und die Kennung des Geräts 5 oder dessen App (devlD), dem Zugriff auf die erzeugte Zugangsberechtigungsinformation gestattet werden soll, übermittelt. Zusätzlich kann auch die Kennung der Fachanlage 3 übermittelt werden, beispielsweise um dem Zugangsberechtigungsserver 21 die Auswahl des richtigen Schlüssels (der für die jeweilige Fachanlage spezifisch sein kann) zur Erzeugung der ZBI zu ermöglichen. Wenn alle Fachanlagen den gleichen Schlüssel verwenden, muss der Zugangsberechtigungsserver 21 nicht notwendigerweise informiert werden, für welche der Fachanlage er ZBI erzeugt. Zumindest die Kennung des Fachs (CompID) wird beispielsweise als Zugangsberechtigungsparameter in die Zugangsberechtigungsinformation aufgenommen und es werden darüber unter Verwendung des ersten Schlüssels, der im Zugangsberechtigungsserver 21 gespeichert oder diesem zugänglich ist, kryptographische Operationen zum Erhalten einer Prüfinformation (z.B. eines HMAC) vorgenommen, die ebenfalls Bestandteil der Zugangsberechtigungsinformation ist. Weitere Zugangsberechtigungsparameter (die ebenfalls die Prüfinformation beeinflussen) sind beispielsweise die Kennung der Fachanlage und/oder die Kennung des Geräts 5 und/oder Information über einen zeitlich beschränkten Gültigkeitszeitraum der Zugangsberechtigungsinformation.

Die erzeugte Zugangsberechtigungsinformation wird dann am Zugangsberechtigungsserver 21 gespeichert, beispielsweise assoziiert mit der Kennung des Geräts 5 oder dessen App zur späteren Zuordenbarkeit zum Gerät 5.

Im Schritt 910 erfolgt eine Rückmeldung an die App, auf die dann im Schritt 911 von der App eine Anfrage nach Zugangsberechtigungsinformation an den Zugangsberechtigungsserver 21 gerichtet wird. Diese Anfrage enthält beispielsweise Information über die Kennung des Geräts 5 oder dessen App (devID). Anhand dieser (oder anderweitig) kann dann die Zugangsberechtigungsinformation, die für das Gerät 5 (oder dessen App) auf dessen Anfrage 907 hin erzeugt wurde, am Zugangsberechtigungsserver 21 identifiziert und im Schritt 912 an das Gerät 5 ausgegeben (z.B. übertragen, beispielsweise mittels zellularem Mobilfunk) werden.

Mittels der erhaltenen Zugangsberechtigungsinformation kann dann eine Öffnung des Fachs 30 der Fachanlage 3 erfolgen. Dazu wird die Zugangsberechtigungsinformation im Schritt 913 an die Fachanlage 3 übertragen, beispielsweise durch drahtlose Kommunikation oder durch Eingabe in eine Benutzerschnittstelle der Fachanlage 3. Die Fachanlage 3 ermittelt anhand der Zugangsberechtigungsinformation, welches Fach 30 der Fachanlage 3 konkret geöffnet werden soll, prüft die Integrität und Authentizität der Zugangsberechtigungsinformation und öffnet (entriegelt) bei positiv verlaufender Prüfung das betreffende Fach 30.

Im Schritt 914 legt der Zusteller/Lieferant dann die Sendung/Lieferung in das Fach 30 ein und schließt das Fach im Schritt 915, insbesondere so dass eine Falle des Schlosses des Fachs 30 einrastet und das Fach somit wieder verriegelt ist. Der Zusteller/Lieferant bestätigt dann gegenüber der App, dass die Sendung/Lieferung eingelegt wurde, was im Schritt 917 zur Übertragung einer Bestätigungsinformation (umfassend die Kennung des Fachs, CompID) führt. Der Verwaltungsserver 20 setzt dann den Status des Fachs 30, der zuvor auf "reserviert" stand, auf "besetzt". Alternativ wäre es möglich, den Besetzt-Status bereits im Schritt 908 anzunehmen und nicht unter reservierten und tatsächlich belegten Fächern zu unterscheiden.

Im Schritt 918 wird die Mobiltelefonnummer des Empfängers der Sendung/Lieferung am Verwaltungsserver aufgerufen (wie sie im Schritt 907 erhalten wurde), ebenso wie die Information (waitCOD), ob eine bezahlte Nachnahme vorliegt oder nicht..

Nachfolgend sind zwei Alternativen 919 und 920 möglich. Gemäß Alternative 919 liegt eine Nachnahme vor, die vom Empfänger aber noch nicht bezahlt wurde (waitCOD = true). Die Bezahlung der Nachnahme muss beispielsweise bereits erfolgt sein, bevor dem Empfänger (Nutzer 7) Zugriff auf seine Sendung/Lieferung möglich ist. Es erfolgt dann keine Aktion, bis eine Zahlungsbestätigung vom ODS-Server 22 an den Verwaltungsserver erfolgt. Dieser Fall ist im Abschnitt 922 des Flussdiagramms 900 dargestellt. Im Schritt 9220 wird die Bestätigung über die erfolgte Zahlung vom ODS-Server 22 am Verwaltungsserver 20 empfangen und daraufhin im Schritt 9221 die Erzeugung von Zugangsberechtigungsinformation durch den Zugangsberechtigungsserver 21 autorisiert. Dazu wird dem Zugangsberechtigungsserver die Mobiltelefonnummer des Empfängers (Nutzer 7), für den die Zugangsberechtigungsinformation bestimmt ist, sowie die Kennung des Fachs 3 übermittelt. Der Zugangsberechtigungsserver 21 erzeugt dann die Zugangsberechtigungsinformation unter Verwendung der Kennung des Fachs 3 (beispielsweise als Zugangsberechtigungsparameter) und assoziiert diese Zugangsberechtigungsinformation beispielsweise mit der Mobiltelefonnummer. Die Mobiltelefonnummer kann zusätzlich oder alternativ auch als Zugangsberechtigungsparameter Teil der Zugangsberechtigungsinformation sein (beispielsweise um der Fachanlage eine zusätzliche Prüfung zu ermöglichen, ob die ZBI auch tatsächlich von dem Gerät 6, für dessen Nutzer 6 sie erzeugt wurde, an die Fachanlage 3 übermittelt wurde, wobei die Mobiltelefonnummer des Geräts zur Gegenprüfung dann ebenfalls - unabhängig von der ZBI - an die Fachanlage 3 übermittelt wird), dies ist allerdings nicht zwingend erforderlich. Wie bereits erläutert kann beispielsweise auch die Kennung der Fachanlage als Zugangsberechtigungsparameter in der Zugangsberechtigungsinformation enthalten sein.

Gemäß der Alternative 920 handelt es sich bei der Sendung/Lieferung entweder um keine Nachnahme, oder diese ist bereits bezahlt. Daraufhin wird im Schritt 9200 die Erzeugung von Zugangsberechtigungsinformation durch den Zugangsberechtigungsserver 21 autorisiert, wie bereits zum Schritt 9221 beschrieben wurde.

Im Schritt 921, der auch unterhalb Schritt 922 angeordnet sein kann, übermittelt die App eine Nachricht (die zumindest die Kennung des Fachs 30 beinhaltet und beispielsweise auch eine Kennung der Sendung/Lieferung) an den ODS-Server 22, um eine Benachrichtigung des Empfängers (Nutzer 7) der Sendung/Lieferung zu bewirken, dass die Sendung/Lieferung in einem konkreten Fach 30 der Fachanlage 3 deponiert und Zugangsberechtigungsinformation zur Abfrage am Zugangsberechtigungsserver 21 bereitgestellt wurde. Der Empfänger wird beispielsweise anhand der Kennung der Sendung/Lieferung aus einem am ODS-Server 22 vorhandenen Sendungs/Lieferungs-Datensatz ermittelt. Alternativ kann im Schritt 921 auch der Verwaltungsserver 20 eine Benachrichtigung des Empfängers veranlassen, beispielsweise durch Übermittlung einer SMS oder MMS an die Mobiltelefonnummer die aus Schritt 907 am Verwaltungsserver 20 bekannt ist.

Als Ergebnis des Flussdiagramms 900 der Fig. 9a/9b ist also eine Sendung/Lieferung in einem Fach 30 der Fachanlage 3 deponiert worden, Zugangsberechtigungsinformation zu diesem Fach 30 für den richtigen Empfänger (identifiziert durch die Mobiltelefonnummer) am Zugangsberechtigungsserver 21 erzeugt und zum Abruf bereitgestellt worden und der Empfänger über diese Verhältnisse informiert worden.

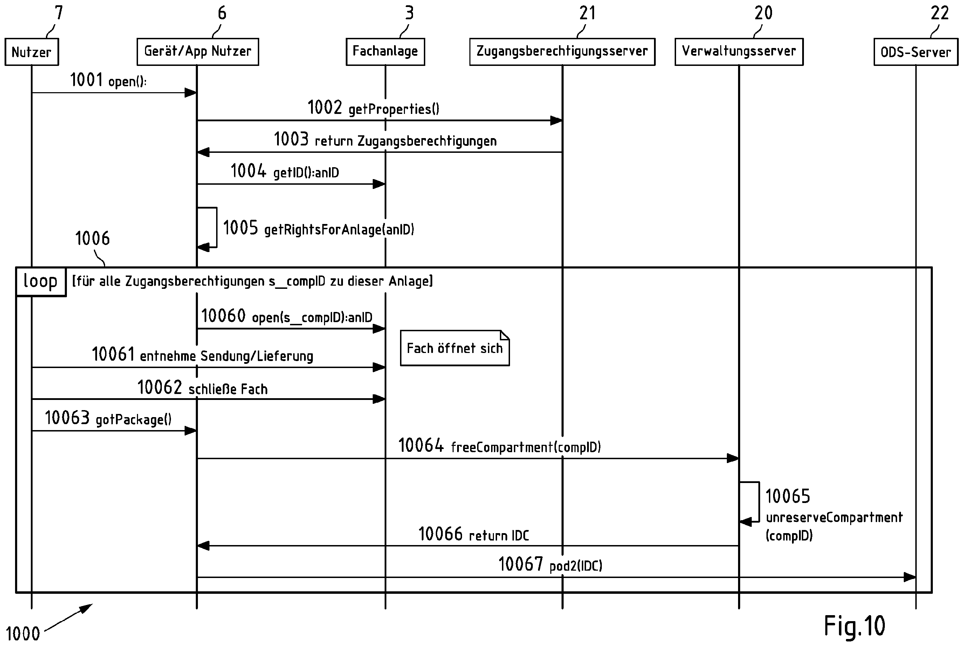

Fig. 10 ist ein Flussdiagramm 1000 einer beispielhaften Ausführungsform eines Verfahrens zum Entnehmen einer gemäß dem Verfahren der Fig. 9a/9b in das Fach 30 der Fachanlage 3 deponierten Sendung oder Lieferung aus dem Fach 30.

In einem Schritt 1001 bekundet der Nutzer 7 gegenüber einem Programm auf seinem Gerät 6 (welches Programm nachfolgend als App bezeichnet wird), dass ein Fach der Fachanlage 30 geöffnet werden soll, beispielsweise durch Starten der App und/oder Betätigung einer Schaltfläche der App. Die App fragt daraufhin beim Zugangsberechtigungsserver 21 die dort für die App bzw. das Gerät 6 hinterlegten Zugangsberechtigungen (also Zugangsberechtigungsinformationen) ab. Diese sind im Zugangsberechtigungsserver 21 beispielsweise mit der Mobiltelefonnummer des Geräts 6 oder einer Kennung des Geräts oder der App assoziiert, so dass anhand dieser Information die betreffenden Zugangsberechtigungen am Zugangsberechtigungsserver 21 ermittelt werden können. Dazu wird die Mobiltelefonnummer oder eine ähnliche Kennung im Schritt 1002 an den Zugangsberechtigungsserver 21 übermittelt.

Im Schritt 1003 wird eine oder mehrere Zugangsberechtigungsinformation an die App übertragen. Wie bereits erwähnt kann die Kommunikation in den Schritten 1002 und 1003 verschlüsselt erfolgen.

Falls eine oder mehrere Zugangsberechtigungsinformation von der App empfangen wurden, wird im Schritt 1004 eine Kennung der Fachanlage durch die App bzw. das Gerät 6 abgefragt, beispielsweise durch drahtlose Kommunikation (z.B. Bluetooth oder NFC). Anderenfalls bricht das Flussdiagramm 1000 beispielsweise ab. Wie oben bereits zu den Schritten 905/906 ausgeführt, kann dies alternativ auch durch optisches Scannen einer Kennung der Fachanlage durch das Gerät 6 erfolgen, z.B. unter Verwendung einer Kamera des Geräts 6.

Im Schritt 1005 wird/werden aus den erhaltenen Zugangsberechtigungsinformation diejenige(n) ausgewählt, die für die Fachanlage mit der Kennung anID bestimmt ist/sind, beispielsweise anhand der in der Zugangsberechtigungsinformation als Zugangsberechtigungsparameter enthaltenen Kennung der Fachanlage anlD.

Für jede dieser ausgewählten Zugangsberechtigungsinformation wird dann der nachfolgend beschriebene Prozess 1006 mit den Schritten 10060-10067 ausgeführt.

Im Schritt 10060 wird von der App eine Nachricht an die Fachanlage 3 gesendet, wobei die Nachricht die Zugangsberechtigungsinformation umfasst. Die Fachanlage prüft basierend auf der Zugangsberechtigungsinformation das zu öffnende Fach, prüft die Zugangsberechtigungsinformation und entriegelt (oder öffnet) das Fach im Falle einer positiven Prüfung (umfassend beispielsweise die positive Prüfung der Authentizität und/oder Integrität der Zugangsberechtigungsinformation sowie die positive Prüfung der in der Zugangsberechtigungsinformation enthaltenen Zugangsberechtigungsparameter, beispielsweise ob die Kennung der Fachanlage zu der Fachanlage passt, ob die Kennung des Fachs in der Fachanlage vorhanden ist und/oder ob ein Gültigkeitszeitraum der Zugangsberechtigungsinformation noch nicht abgelaufen ist).

In den Schritten 10061 entnimmt der Nutzer 6 die Sendung/Lieferung und schließt die Tür des geöffneten Fachs im Schritt 10062. Im Schritt 10063 bestätigt der Nutzer 7 gegenüber der App, dass er die Sendung/Lieferung erhalten hat.

Die App sendet auf diese Bestätigung hin im Schritt 10064 eine Nachricht (beinhaltend die Kennung des Fachs) an den Verwaltungsserver 20, um die Freigabe des Fachs zu bewirken. Am Verwaltungsserver 20 wird daraufhin der Zustand des Fachs von belegt auf frei geändert, also der Fachbelegungszustand der Fachanlage aktualisiert.

Im Schritt 10066 wird eine Bestätigung vom Verwaltungsserver 20 an die App gesendet, die beispielsweise eine Kennung der Sendung/Lieferung (IDC) umfasst.

Im Schritt 10067 informiert die App den ODS-Server 22, dass die Sendung/Lieferung (mit der Kennung IDC) vom Nutzer 7 empfangen wurde.

Die in den Fig. 9a/b und 10 für ein "Last-Mile-Szenario", in dem eine Sendung/Lieferung durch einen Zusteller/Lieferanten 4 in einem Fach 30 der Fachanlage 3 deponiert und dann von dem Empfänger (Nutzer 7) entnommen wird, erläuterten Mechanismen lassen sich ohne weiteres auf ein "First-Mile-Szenario" übertragen, bei dem eine Sendung/Lieferung durch den Nutzer 7 in einem Fach 30 der Fachanlage 3 deponiert und von einem Zusteller/Lieferanten 4 aus dem Fach abgeholt wird. Die nachfolgenden Ansprüche umfassen daher sowohl Last-Mile- als auch First-Mile-Anwendungsfelder.

Die in dieser Spezifikation beschriebenen beispielhaften Ausführungsformen / Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren durchgeführt durch einen Server oder ein System, dass zumindest zwei Vorrichtungen umfasst, wobei mindestens eine Vorrichtung ein Server ist, umfassend:
- Erhalten einer von einem Gerät einer Person, die Zugang zu einem Fach einer Vielzahl von Fächern einer Fachanlage erhalten will, erfassten oder erhaltenen Kennung der Fachanlage, und
- Erzeugen und/oder Ausgeben von Zugangsberechtigungsinformation, deren Bereitstellung an eine Fachanlage notwendige Bedingung für die Gewährung von Zugang zu einem Fach einer Vielzahl von Fächern der Fachanlage durch die Fachanlage ist, wobei die Zugangsberechtigungsinformation erzeugt wird, nachdem die Kennung der Fachanlage durch das Gerät der Person erfasst oder erhalten wurde, und die Kennung der Fachanlage bei der Erzeugung der Zugangsberechtigungsinformation berücksichtigt wird.

2. Verfahren nach Anspruch 1, wobei bereits bei Erzeugung der Zugangsberechtigungsinformation feststeht, um welches der Fächer der Fachanlage es sich bei dem Fach konkret handelt, und wobei die Zugangsberechtigungsinformation zumindest unter Verwendung einer das Fach identifizierenden Information dergestalt erzeugt wird, dass das Fach unter Verwendung der Zugangsberechtigungsinformation durch die Fachanlage ermittelbar ist, wobei insbesondere die Fachanlage hinsichtlich der Ermittlung des Fachs unter Verwendung der Zugangsberechtigungsinformation zustandslos ist

3. Verfahren nach einem der vorherigen Ansprüche, wobei das Fach vor der Erzeugung der Zugangsberechtigungsinformation ausgewählt und die Zugangsberechtigungsinformation zumindest unter Verwendung von das ausgewählte Fach identifizierender Information erzeugt wird, und wobei das Fach ausgewählt wird von einer Person, die Zugang zu dem Fach erhalten will, von einem Gerät der Person, von der Fachanlage, oder von einem Zentralsystem, das an der Verwaltung einer Vielzahl von Fachanlagen, umfassend die Fachanlage, und/oder an der Erzeugung der Zugangsberechtigungsinformation zumindest beteiligt ist

4. Verfahren nach einem der vorherigen Ansprüche, wobei die Erzeugung der Zugangsberechtigungsinformation in Reaktion auf eine Anfrage von einem Gerät einer Person vorgenommen oder ausgelöst wird, die Zugang zu einem Fach der Fachanlage benötigt, das Verfahren ferner umfassend:
- Übermitteln oder Bewirken des Übermittelns der Zugangsberechtigungsinformation nach ihrer Erzeugung insbesondere automatisch an das Gerät, so dass eine Bereitstellung der Zugangsberechtigungsinformation durch das Gerät oder die Person an die Fachanlage ermöglicht wird.

5. Verfahren nach einem der vorherigen Ansprüche, wobei die Erzeugung der Zugangsberechtigungsinformation in Reaktion auf eine von einem Gerät einer Person erhaltene Information, dass, insbesondere durch die Person, eine Sendung oder Lieferung in das Fach eingelegt und/oder das Fach geschlossen wurde, vorgenommen oder ausgelöst wird das Verfahren ferner umfassend:
- Erhalten der Information, dass eine Sendung oder Lieferung in das Fach eingelegt und/oder das Fach geschlossen wurde.

6. Verfahren nach einem der vorherigen Ansprüche, ferner umfassend:
- Nachhalten des Belegungsstatus aller Fächer oder einer Untermenge der Fächer der Fachanlage, durch eine gegenüber der Fachanlage externe Einheit, insbesondere durch ein an der Verwaltung einer Vielzahl von Fachanlagen, umfassend die Fachanlage, und/oder an der Erzeugung der Zugangsberechtigungsinformation zumindest beteiligtes Zentralsystem, wobei ein zuvor als unbelegt angesehenes Fach dann als belegt angesehen wird, wenn Zugangsberechtigungsinformation betreffend dieses Fach erzeugt wird, und ein zuvor als belegt angesehenes Fach dann wieder als unbelegt angesehen wird, wenn von einem Gerät einer Person eine Information erhalten wird, dass eine in dem Fach enthaltene Sendung oder Lieferung entnommen wurde.

7. Verfahren nach Anspruch 6, ferner umfassend:
- Auswählen, insbesondere durch die externe Einheit, des Fachs vor der Erzeugung der Zugangsberechtigungsinformation zumindest unter Berücksichtigung des nachgehaltenen Belegungsstatus aller Fächer oder einer Untermenge der Fächer der Fachanlage, wobei die Zugangsberechtigungsinformation zumindest unter Verwendung von das ausgewählte Fach identifizierender Information erzeugt wird, wobei das Auswählen des Fachs insbesondere ferner unter Berücksichtigung eines Reservierungsstatus aller Fächer oder der Untermenge der Fächer der Fachanlage erfolgt, und wobei ein Fach insbesondere dann als reserviert angesehen wird, wenn für dieses Fach angeforderte Zugangsberechtigungsinformation erzeugt oder deren Erzeugung angestoßen wurde, aber noch keine Bestätigung erhalten wurde, dass das Fach insbesondere nach Nutzung der angeforderten Zugangsberechtigungsinformation belegt worden ist

8. Verfahren durchgeführt durch eine Fachanlage, umfassend:
- Erhalten von Zugangsberechtigungsinformation an der Fachanlage, wobei das Erhalten der Zugangsberechtigungsinformation notwendige Bedingung für die Gewährung von Zugang zu einem Fach einer Vielzahl von Fächern der Fachanlage durch die Fachanlage ist, ferner umfassend:
- Bereitstellen oder Ausgeben einer Kennung der Fachanlage zur Erfassung oder zum Erhalten durch ein Gerät einer Person, die Zugang zu dem Fach der Fachanlage erhalten will, wobei die Zugangsberechtigungsinformation erzeugt wird, nachdem die Kennung der Fachanlage durch das Gerät der Person, erfasst oder erhalten wurde und wobei die Kennung der Fachanlage bei der Erzeugung der Zugangsberechtigungsinformation berücksichtigt wird.

9. Verfahren nach Anspruch 8, wobei bereits bei Erzeugung der Zugangsberechtigungsinformation feststand, um welches der Fächer der Fachanlage es sich bei dem Fach konkret handelt und die Zugangsberechtigungsinformation zumindest unter Verwendung einer das Fach identifizierenden Information dergestalt erzeugt wurde, dass das Fach unter Verwendung der Zugangsberechtigungsinformation durch die Fachanlage ermittelbar ist, das Verfahren ferner umfassend:
- Ermitteln des Fachs unter Verwendung der Zugangsberechtigungsinformation, wobei insbesondere die Fachanlage hinsichtlich der Ermittlung des Fachs unter Verwendung der Zugangsberechtigungsinformation zustandslos ist.

10. Verfahren nach einem der Ansprüche 8-9, wobei das Verfahren weiter umfasst:
- Auswählen des Fachs und Ausgeben der das ausgewählte Fach identifizierenden Information, so dass diese bei der Erzeugung der Zugangsberechtigungsinformation verwendet werden kann, oder
- Ermöglichen einer Auswahl des Fachs durch eine Person oder ein Gerät einer Person.

11. Verfahren durchgeführt durch ein Gerät einer Person, umfassend:
- Erhalten von Zugangsberechtigungsinformation, deren Bereitstellung an eine Fachanlage notwendige Bedingung für die Gewährung von Zugang zu einem Fach einer Vielzahl von Fächern der Fachanlage durch die Fachanlage ist, an dem Gerät einer Person, und
- Übermitteln der Zugangsberechtigungsinformation an die Fachanlage oder Ausgabe der Zugangsberechtigungsinformation an die Person, um der Person die Bereitstellung der Zugangsberechtigungsinformation an die Fachanlage zu ermöglichen,
wobei das Verfahren ferner umfasst:
- Erfassen oder Erhalten einer Kennung der Fachanlage, und
- Ausgeben der erfassten oder erhaltenen Kennung der Fachanlage, so dass diese bei der Erzeugung der Zugangsberechtigungsinformation berücksichtigt werden kann.

12. Verfahren nach Anspruch 11, ferner umfassend:
- Auswählen des Fachs und Ausgeben der das ausgewählte Fach identifizierenden Information, so dass diese bei der Erzeugung der Zugangsberechtigungsinformation verwendet werden kann, oder
- Ermöglichen einer Auswahl des Fachs durch eine Person, und Ausgeben der das ausgewählte Fach identifizierenden Information, so dass diese bei der Erzeugung der Zugangsberechtigungsinformation verwendet werden kann.

13. Verfahren nach einem der Ansprüche 1-12, wobei die Zugangsberechtigungsinformation einen oder mehrere Zugangsberechtigungssparameter und eine unter Verwendung eines ersten Schlüssels und der Zugangsberechtigungsparameter erzeugte kryptographische Information umfasst, wobei einer des einen oder der mehreren Zugangsberechtigungsparameter die Kennung des Fachs ist.

14. Verfahren nach Anspruch 13, wobei die Kennung der Fachanlage dadurch bei der Erzeugung der Zugangsberechtigungsinformation berücksichtigt wird, dass der erste Schlüssel, der für jede Fachanlage anders gewählt ist, anhand der Kennung der Fachanlage ausgewählt wird, oder dadurch, dass einer der Zugangsberechtigungsparameter die Kennung der Fachanlage ist.

15. Vorrichtung (7) oder System aus zumindest zwei Vorrichtungen, eingerichtet zur Ausführung des Verfahrens (500, 600, 700, 800) nach einem der Ansprüche 1-14 oder umfassend jeweilige Mittel zur Ausführung der Schritte des Verfahrens (500, 600, 700, 800) nach einem der Ansprüche 1-14, wobei die Vorrichtung (7) bzw. das System aus zumindest zwei Vorrichtungen wie folgt ausgebildet sind:
- im Fall des unmittelbaren oder mittelbaren Rückbezugs auf Anspruch 1 ist die Vorrichtung (7) der Server, oder das System aus zumindest zwei Vorrichtungen ist das System, das zumindest zwei Vorrichtungen umfasst,
- im Fall des unmittelbaren oder mittelbaren Rückbezugs auf Anspruch 8 ist die Vorrichtung (7) die Fachanlage;
- im Fall des unmittelbaren oder mittelbaren Rückbezugs auf Anspruch 11 ist die Vorrichtung (7) das Gerät einer Person.

16. Computerprogramm, umfassend Programmanweisungen, die einen Prozessor (80, 90, 100) zur Ausführung und/oder Steuerung des Verfahrens (500, 600, 700, 800) nach einem der Ansprüche 1-14 veranlassen, wenn das Computerprogramm auf dem Prozessor (80, 90, 100) läuft.

## Claims

1. A method carried out by a server or a system which comprises at least two apparatuses, wherein at least one apparatus is a server, comprising:
- obtaining of an identifier of a locker system detected or obtained by a device of a person who wants to obtain access to a locker of a plurality of lockers of the locker system, and
- generating and/or outputting access authorization information, the provision of which to a locker system is a necessary condition for the granting of access to a locker of a plurality of lockers of the locker system by the locker system, wherein the access authorization information is generated after the identifier of the locker system had been detected or obtained by the device of the person, and the identifier of the locker system is taken into account during the generating of the access authorization information.

2. The method according to Claim 1, wherein it is already established during the generating of the access authorization information which of the lockers of the locker system the locker actually is, and wherein the access authorization information is generated in such a manner at least using information identifying the locker, that the locker can be determined by the locker system using the access authorization information, wherein the locker system is stateless in particular with regards to the determination of the locker using the access authorization information.

3. The method according to one of the preceding claims, wherein the locker is selected prior to the generating of the access authorization information, and the access authorization information is generated at least using information identifying the selected locker, and wherein the locker is selected by a person who wants to obtain access to the locker, by a device of the person, by the locker system or by a central system which is at least involved in the management of a plurality of locker systems comprising the locker system and/or in the generating of the access authorization information.

4. The method according to one of the preceding claims, wherein the generating of the access authorization information is undertaken or triggered as a reaction to a request from a device of a person who requires access to a locker of the locker system, the method further comprising:
- transmitting or effecting the transmission of the access authorization information after the generating thereof, particularly automatically, to the device, so provision of the access authorization information by the device or the person to the locker system is enabled.

5. The method according to one of the preceding claims, wherein the generating of the access authorization information is undertaken or triggered as a reaction to information, which is obtained from a device of a person, that a parcel or delivery was placed into the locker and/or the locker was closed, particularly by the person, the method further comprising:
- obtaining the information that a parcel or delivery was placed into the locker and/or the locker was closed.

6. The method according to one of the preceding claims, further comprising:
- tracking the occupancy status of all lockers or a subset of the lockers of the locker system by a unit which is external with respect to the locker system, particularly by a central system which is at least involved in the management of a plurality of locker systems, which includes the locker system, and/or in the generating of the access authorization information, wherein a locker, which was previously considered to be unoccupied, is then considered to be occupied if access authorization information relating to this locker is generated and a locker, which was previously considered to be occupied, is then considered to be unoccupied again if information is obtained from a device of a person that a parcel or delivery contained in the locker had been removed.

7. The method according to Claim 6, further comprising:
- selecting the locker, particularly by means of the external unit, prior to the generating of the access authorization information, at least taking the tracked occupancy status of all lockers or a subset of the lockers of the locker system into account, wherein the access authorization information is generated at least using information identifying the selected locker, wherein the selection of the locker in particular further takes place taking a reservation status of all lockers or the subset of the lockers of the locker system into account, and wherein a locker is particularly considered to be reserved if access authorization information requested for this locker had been generated or the generation thereof had been initiated, but no confirmation had yet been obtained that the locker has been occupied, particularly after using the requested access authorization information.

8. A method carried out by a locker system, comprising:
- obtaining access authorization information at the locker system, wherein obtaining the access authorization information is a necessary condition for the granting of access to a locker of a plurality of lockers of the locker system by the locker system, further comprising:
- providing or outputting an identifier of the locker system to be detected or to be obtained by a device of a person who wants to obtain access to the locker of the locker system, wherein the access authorization information is generated after the identifier of the locker system was detected or obtained by the device of the person and wherein the identifier of the locker system is taken into account during the generating of the access authorization information.

9. The method according to Claim 8, wherein it was already established during the generating of the access authorization information which of the lockers of the locker system the locker actually is, and the access authorization information was generated in such a manner at least using information identifying the locker, that the locker can be determined by the locker system using the access authorization information, the method further comprising:
- determining the locker using the access authorization information, wherein the locker system is stateless in particular with regards to the determination of the locker using the access authorization information.

10. The method according to either of Claims 8 and 9, wherein the method further comprises:
- selecting the locker and outputting the information identifying the selected locker, so this information can be used during the generating of the access authorization information, or
- enabling a selection of the locker by a person or a device of a person.

11. A method carried out by a device of a person, comprising:
- obtaining access authorization information, the provision of which to a locker system is a necessary condition for the granting of access to a locker of a plurality of lockers of the locker system by the locker system, at the device of a person, and
- transmitting the access authorization information to the locker system or outputting the access authorization information to the person, in order to allow the person to provide the access authorization information to the locker system,
wherein the method further comprises:
- detecting or obtaining an identifier of the locker system, and
- outputting the detected or obtained identifier of the locker system, so that this identifier can be taken into account during the generating of the access authorization information.

12. The method according to Claim 11, further comprising:
- selecting the locker and outputting the information identifying the selected locker, so this information can be used during the generating of the access authorization information, or
- enabling a selection of the locker by a person and outputting the information identifying the selected locker, so this information can be used during the generating of the access authorization information.

13. The method according to one of Claims 1-12, wherein the access authorization information comprises on or more access authorization parameters and cryptographic information generated using a first key and the access authorization parameters, wherein one of the one or the plurality of access authorization parameters is the identifier of the locker.

14. The method according to Claim 13, wherein the identifier of the locker system is taken into account during the generating of the access authorization information in that the first key, which is chosen differently for each locker system, is selected on the basis of the identifier of the locker system or in that one of the access authorization parameters is the identifier of the locker system.

15. A apparatus (7) or system of at least two apparatuses, set up for executing the method (500, 600, 700, 800) according to one of Claims 1-14 or comprising respective means for executing the steps of the method (500, 600, 700, 800) according to one of Claims 1-14, wherein the apparatus (7) or the system made up of at least two apparatuses are designed as follows:
- in the case of direct or indirect back-reference to Claim 1, the apparatus (7) is the server, or the system of at least two apparatuses is the system comprising at least two apparatuses;
- in the case of direct or indirect back-reference to Claim 8, the apparatus (7) is the locker system;
- in the case of direct or indirect back-reference to Claim 11, the apparatus (7) is the device of a person.

16. A computer program comprising program instructions, which cause a processor (80, 90, 100) to execute and/or control the method (500, 600, 700, 800) according to one of Claims 1-14 when the computer program runs on the processor (80, 90, 100).

## Revendications

1. Procédé mis en oeuvre par un serveur ou un système comprenant au moins deux dispositifs, au moins un dispositif étant un serveur, comprenant :
- le fait d'obtenir un identifiant de l'installation à casiers, détecté ou obtenu par un dispositif d'une personne souhaitant accéder à un casier parmi une pluralité de casiers d'une installation à casiers, et
- le fait de générer et/ou d'émettre une information d'autorisation d'accès dont la fourniture à une installation à casiers est une condition nécessaire pour l'octroi d'un accès à un casier d'une pluralité de casiers de l'installation à casiers par l'installation à casiers, l'information d'autorisation d'accès étant générée après que l'identifiant de l'installation à casiers a été détecté ou reçu par l'appareil de la personne, et l'identifiant de l'installation à casiers étant pris en compte dans la génération de l'information d'autorisation d'accès.

2. Procédé selon la revendication 1, dans lequel, dès la génération de l'information d'autorisation d'accès, il est déterminé de quel casier de l'installation à casiers il s'agit concrètement pour le casier, et dans lequel l'information d'autorisation d'accès est générée au moins en utilisant une information identifiant le casier, de telle sorte que le casier peut être déterminé par l'installation à casiers en utilisant l'information d'autorisation d'accès, l'installation à casiers étant notamment sans statut en ce qui concerne la détermination du casier en utilisant l'information d'autorisation d'accès.

3. Procédé selon l'une des revendications précédentes, dans lequel le casier est sélectionné avant la génération de l'information d'autorisation d'accès et l'information d'autorisation d'accès est générée au moins en utilisant une information identifiant le casier sélectionné, et dans lequel le casier est sélectionné par une personne qui souhaite avoir accès au casier, par un appareil de la personne, par l'installation à casiers, ou par un système central qui est impliqué dans la gestion d'une pluralité d'installations à casiers comprenant l'installation à casiers et/ou au moins dans la génération de l'information d'autorisation d'accès.

4. Procédé selon l'une des revendications précédentes, dans lequel la génération de l'information d'autorisation d'accès est effectuée ou déclenchée en réaction à une requête provenant d'un appareil d'une personne nécessitant un accès à un casier de l'installation à casiers, le procédé comprenant en outre :
- le fait de transmettre ou de provoquer la transmission de l'information d'autorisation d'accès après sa génération, en particulier automatiquement à l'appareil, de manière à permettre une mise à disposition de l'information d'autorisation d'accès par l'appareil ou la personne à l'installation à casiers.

5. Procédé selon l'une des revendications précédentes, dans lequel la génération de l'information d'autorisation d'accès est effectuée ou déclenchée en réaction à une information reçue d'un appareil d'une personne selon laquelle, notamment par la personne, un envoi ou une livraison a été introduit dans le casier et/ou le casier a été fermé, le procédé comprenant en outre :
- le fait d'obtenir l'information selon laquelle un envoi ou une livraison a été introduit dans le casier et/ou le casier a été fermé.

6. Procédé selon l'une des revendications précédentes, comprenant en outre :
- le fait d'opérer un suivi du statut d'occupation de tous les casiers ou d'un sous-ensemble des casiers de l'installation à casiers, par une entité externe à l'installation à casiers, notamment par un système central participant au moins à la gestion d'une pluralité d'installations à casiers comprenant l'installation à casiers et/ou à la génération de l'information d'autorisation d'accès, un casier précédemment considéré comme inoccupé étant considéré comme occupé lorsque de l'information d'autorisation d'accès concernant ce casier est générée, et un casier précédemment considéré comme occupé étant à nouveau considéré comme inoccupé lorsqu'une information est reçue d'un appareil d'une personne qu'un envoi ou une livraison contenu dans le casier a été retiré.

7. Procédé selon la revendication 6, comprenant en outre :
- le fait de sélectionner, notamment par l'unité externe, le casier avant de générer l'information d'autorisation d'accès, au moins en tenant compte du statut d'occupation suivi de tous les casiers ou d'un sous-ensemble des casiers de l'installation à casiers, l'information d'autorisation d'accès étant générée au moins en utilisant une information identifiant le casier sélectionné, la sélection du casier s'effectue en particulier en tenant compte d'un statut de réservation de tous les casiers ou du sous-ensemble de casiers de l'installation à casiers, et un casier est considéré comme réservé en particulier lorsqu'une information d'autorisation d'accès demandée pour ce casier a été générée ou que sa génération a été déclenchée, mais qu'aucune confirmation n'a encore été reçue selon laquelle le casier a été occupé, en particulier après utilisation d'une information d'autorisation d'accès demandée.

8. Procédé mis en oeuvre par une installation à casiers, comprenant :
- le fait d'obtenir une information d'autorisation d'accès au niveau de l'installation à casiers, l'obtention d'une information d'autorisation d'accès étant une condition nécessaire pour que l'installation à casiers accorde l'accès à un casier parmi une pluralité de casiers de l'installation à casiers, comprenant en outre :
- le fait de fournir ou émettre un identifiant de l'installation à casiers pour détection ou obtention par un appareil d'une personne souhaitant accéder au casier de l'installation à casiers, l'information d'autorisation d'accès étant générée après que l'identifiant de l'installation à casiers a été détecté ou obtenu par l'appareil de la personne, et l'identifiant de l'installation à casiers étant pris en compte dans la génération de l'information d'autorisation d'accès.

9. Procédé selon la revendication 8, dans lequel, dès la génération de l'information d'autorisation d'accès, il a été déterminé duquel des casiers de l'installation à casiers il s'agit concrètement pour le casier et l'information d'autorisation d'accès a été générée au moins en utilisant une information identifiant le casier de telle sorte que le casier peut être déterminé par l'installation à casiers en utilisant l'information d'autorisation d'accès, le procédé comprenant en outre :
- le fait de déterminer le casier en utilisant l'information d'autorisation d'accès, l'installation à casiers étant notamment sans état en ce qui concerne la détermination du casier en utilisant l'information d'autorisation d'accès.

10. Procédé selon l'une des revendications 8 à 9, le procédé comprenant en outre :
- le fait de sélectionner le casier et émettre l'information identifiant le casier sélectionné de manière qu'elle puisse être utilisée dans la génération de l'information d'autorisation d'accès, ou
- le fait de permettre à une personne ou à un dispositif d'une personne de sélectionner le casier.

11. Procédé mis en oeuvre par un dispositif d'une personne, comprenant :
- le fait d'obtenir, au niveau de l'appareil d'une personne, une information d'autorisation d'accès dont la fourniture à une installation à casiers est une condition nécessaire pour que l'installation à casiers donne accès à un casier parmi une pluralité de casiers de l'installation à casiers, et
- le fait de transmettre une information d'autorisation d'accès à l'installation à casiers ou la délivrance d'une information d'autorisation d'accès à la personne pour permettre à la personne de fournir une information d'autorisation d'accès à l'installation à casiers, le procédé comprenant en outre :
- le fait de détecter ou d'obtenir un identifiant de l'installation à casiers, et
- le fait d'émettre l'identifiant de l'installation à casiers saisi ou reçu, de sorte qu'il puisse être pris en compte lors de la génération d'une information d'autorisation d'accès.

12. Procédé selon la revendication 11, comprenant en outre :
- le fait de sélectionner le casier et délivrer l'information identifiant le casier sélectionné, de manière qu'elle puisse être utilisée lors de la génération de l'information d'autorisation d'accès, ou
- le fait de permettre à une personne de sélectionner le casier, et émettre l'information identifiant le casier sélectionné de manière qu'elle puisse être utilisée dans la génération d'une information d'autorisation d'accès.

13. Procédé selon l'une des revendications 1 à 12, dans lequel l'information d'autorisation d'accès comprend un ou plusieurs paramètres d'autorisation d'accès et une information cryptographique générée en utilisant une première clé et les paramètres d'autorisation d'accès, l'un desdits un ou plusieurs paramètres d'autorisation d'accès étant l'identifiant du casier.

14. Procédé selon la revendication 13, dans lequel l'identifiant de l'installation à casiers est pris en compte dans la génération de l'information d'autorisation d'accès en sélectionnant la première clé, choisie différente pour chaque casier, à partir de l'identifiant de l'installation à casiers, ou en ce qu'un des paramètres d'autorisation d'accès est l'identifiant de l'installation à casiers.

15. Dispositif (7) ou système d'au moins deux dispositifs agencé pour mettre en oeuvre le procédé (500, 600, 700, 800) selon l'une des revendications 1 à 14 ou comprenant des moyens respectifs pour mettre en oeuvre les étapes du procédé (500, 600, 700, 800) selon l'une des revendications 1 à 14, le dispositif (7) ou le système d'au moins deux dispositifs étant agencé comme suit :
- dans le cas d'une référence directe ou indirecte à la revendication 1, le dispositif (7) est le serveur, ou le système d'au moins deux dispositifs est le système comprenant au moins deux dispositifs ;
- dans le cas de la référence directe ou indirecte à la revendication 8, le dispositif (7) est l'installation à casiers ;
- dans le cas de la référence directe ou indirecte à la revendication 11, le dispositif (7) est l'appareil d'une personne.

16. Programme d'ordinateur comprenant des instructions de programme qui amènent un processeur (80, 90, 100) à exécuter et/ou à commander le procédé (500, 600, 700, 800) selon l'une des revendications 1 à 14, lorsque le programme d'ordinateur est exécuté sur le processeur (80, 90, 100).
